(19) Europäisches Patentamt
European Patent Office
Office européen des brevets

(11) **EP 2 490 499 A1**

(12) **EUROPEAN PATENT APPLICATION**
published in accordance with Art. 153(4) EPC

(43) Date of publication:
**22.08.2012 Bulletin 2012/34**

(51) Int Cl.:
***H04W 72/04*** (2009.01)

(21) Application number: **11732641.3**

(22) Date of filing: **05.01.2011**

(86) International application number:
**PCT/CN2011/070038**

(87) International publication number:
**WO 2011/085651 (21.07.2011 Gazette 2011/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.01.2010 CN 201010004473**

(71) Applicant: **ZTE Corporation**
**Shenzhen City, Guangdong 518057 (CN)**

(72) Inventors:
• **HE, Meifang**
  **Shenzhen**
  **Guangdong 518057 (CN)**
• **SHI, Lirong**
  **Shenzhen**
  **Guangdong 518057 (CN)**
• **CHENG, Xiang**
  **Shenzhen**
  **Guangdong 518057 (CN)**
• **YANG, Li**
  **Shenzhen**
  **Guangdong 518057 (CN)**
• **CUI, Yingchuan**
  **Shenzhen**
  **Guangdong 518057 (CN)**

(74) Representative: **Krauns, Christian**
  **Wallinger Ricker Schlotter Tostmann**
  **Patent- und Rechtsanwälte**
  **Zweibrückenstraße 5-7**
  **80331 München (DE)**

(54) **METHOD AND SYSTEM FOR DELIVERING AND ACQUIRING SECONDARY CARRIER PAIR INFORMATION**

(57) The invention provides a method for transferring and acquiring pairing information of secondary carriers comprising: for a specified user equipment (UE), a serving radio network controller configuring pairing information of an uplink secondary carrier and a downlink secondary carrier of an uplink secondary cell, and sending the pairing information of the uplink secondary carrier and the downlink secondary carrier of the uplink secondary cell in multiple carriers of the UE to a NodeB through control signaling, or sending the pairing information of the uplink secondary carrier and the downlink secondary carrier to a drift radio network controller through the control signaling, the drift radio network controller sending the pairing information of the uplink secondary carrier and the downlink secondary carrier to the NodeB. The invention further provides a system for transferring and acquiring pairing information of secondary carriers. The invention implements sending and acquiring of scheduling information of the uplink secondary carrier of the UE.

FIG.2

**Description**

Technical Field

The present invention relates to a method for transferring and acquiring pairing information of secondary carriers in the Wide band Code Division Multiple Access (WCDMA) radio communication system, and in particular, to a method and system for transferring and acquiring pairing information of secondary carriers when a radio link is set up or reconfigured in the multi-carrier high speed downlink packet access technology.

Background of the Related Art

WCDMA is a 3rd radio communication system, an air interface of which performs wideband frequency spreading radio communication using a code division multiple access multiplexing mode to provide data transmission service to upper layers.

In the air interface of WCDMA, bandwidth of a carrier is 5 MHz, and a pair of frequency bands are used, one being used for uplink, and the other being used for downlink. The specific frequency band table is as shown in table 1.

Table 1 Frequency band table

| Operating frequency band | Uplink frequency UE sending, NodeB receiving | Downlink frequency UE receiving, NodeB sending |
|---|---|---|
| I | 1920 - 1980 MHz | 2110 -2170 MHz |
| II | 1850 -1910 MHz | 1930 -1990 MHz |
| III | 1710-1785 MHz | 1805-1880 MHz |
| IV | 1710-1755 MHz | 2110-2155 MHz |
| V | 824 - 849MHz | 869-894MHz |
| VI | 830-840 MHz | 875-885 MHz |
| VII | 2500 - 2570 MHz | 2620 - 2690 MHz |
| VIII | 880 - 915 MHz | 925 - 960 MHz |
| IX | 1749.9 - 1784.9 MHz | 1844.9 - 1879.9 MHz |
| X | 1710-1770 MHz | 2110-2170 MHz |
| XI | 1427.9 - 1452.9 MHz | 1475.9 - 1500.9 MHz |
| XII | 698 - 716 MHz | 728 - 746 MHz |
| XIII | 777 - 787 MHz | 746 - 756 MHz |
| XIV | 788 - 798 MHz | 758 - 768 MHz |
| XV | Reserved | Reserved |
| XVI | Reserved | Reserved |
| XVII | Reserved | Reserved |
| XVIII | Reserved | Reserved |
| XIX | 830 - 845 MHz | 875 -890 MHz |

The frequency of the carrier is represented by a Universal Telecommunication Radio Access (UTRA) Absolute Radio Frequency Channel Number (UARFCN). The UARFCN definition table is as shown in table 2.

Table 2 UARFCN definition table

| Operating frequency band | Uplink frequency UE sending, NodeB receiving | | | Downlink frequency UE receiving, NodeB sending | | |
|---|---|---|---|---|---|---|
| | UARFCN reference offset (denoted as $F_{UL\_Offset}$) [MHz] | Carrier frequency (denoted as $F_{UL}$) range [MHz] | | UARFCN reference offset (denoted as $F_{DL\_Offset}$) [MHz] | Carrier frequency (denoted as FDL) range [MHz] | |
| | | Minimum (denoted as $F_{UL\,low}$) | Maximum (denoted as $F_{UL\,high}$) | | Minimum (denoted as $F_{DL\,low}$) | Maximum (denoted as $F_{DL\,high}$) |
| I | 0 | 1922.4 | 1977.6 | 0 | 2112.4 | 2167.6 |
| 11 | 0 | 1852.4 | 1907.6 | 0 | 1932.4 | 1987.6 |
| III | 1525 | 1712.4 | 1782.6 | 1575 | 1807.4 | 1877.6 |
| IV | 1450 | 1712.4 | 1752.6 | 1805 | 2112.4 | 2152.6 |
| V | 0 | 826.4 | 846.6 | 0 | 871.4 | 891.6 |
| VI | 0 | 832.4 | 837.6 | 0 | 877.4 | 882.6 |
| VII | 2100 | 2502.4 | 2567.6 | 2175 | 2622.4 | 2687.6 |
| VIII | 340 | 882.4 | 912.6 | 340 | 927.4 | 957.6 |
| IX | 0 | 1752.4 | 1782.4 | 0 | 1847.4 | 1877.4 |
| X | 1135 | 1712.4 | 1767.6 | 1490 | 2112.4 | 2167.6 |
| XI | 733 | 1430.4 | 1450.4 | 736 | 1478.4 | 1498.4 |
| XII | -22 | 700.4 | 713.6 | -37 | 730.4 | 743.6 |
| XIII | 21 | 779.4 | 784.6 | -55 | 748.4 | 753.6 |
| XIV | 12 | 790.4 | 795.6 | -63 | 760.4 | 765.6 |
| XIX | 770 | 832.4 | 842.6 | 735 | 877.4 | 887.6 |

For each operating frequency band, values of UARFCNs are defined as follows according to the above table 2:

$$\text{uplink: } 5 * (F_{UL} - F_{UL\_Offset}) \,, \quad F_{UL\_low} \leq F_{UL} \leq F_{UL\_high}$$

$$\text{downlink: } 5 * (F_{DL} - F_{DL\_Offset}) \,, \quad F_{DL\_low} \leq F_{DL} \leq F_{DL\_high}$$

A radio link, which is a logical connection between a User Equipment (UE) and an access point of a radio access system, is usually comprised of one or more radio bearer transmissions in physical implementation. There is at most one radio link between the UE and an access point (usually is referred to as a cell) of the radio access system. A radio link identifier is used to identify a radio link and each radio link associated with the UE has a unique radio link identifier.

Interconnection of type B (IUB) interface is a logical interface between a radio network controller and a NodeB. An IUB interface protocol frame has two function layers, a radio network layer and a transmission network layer. A NodeB Application Part (NBAP), which is a part of the radio network layer, accurately and completely specifies functional behaviors of the NodeB. The basic process of the NBAP is divided into a common process and a special process. The common process is applied to signaling independent of a particular UE existing in the NodeB or to a particular UE context initialization request process, including setting up the first radio link of the UE and selecting a service termination endpoint. The special process refers to a process associated with context of a particular UE. After the radio network controller allocates a service UE node to the UE through the common process, each subsequent signaling associated with the UE will be exchanged through a dedicated control port of the node using the special process, including adding, releasing and re-configuring the radio link for the UE.

Interconnection of RNC (IUR) interface is an interface used by the radio network controller to exchange signaling and data with other radio network controllers, and is the tie of interconncetion between radio network sub-systems. Different radio network sub-systems can be conneted together via the IUR interfaces, and complete mobility management of the UE connected to the radio network controller across the radio network subsystems through a dedicated protocol-Radio Network Subsystem Application Part (RNSAP), including functions, such as handover between radio network subsystems, radio resource processing and synchronization, etc. When a UE sets up a connection to a radio access network and generates soft handover at the IUR interface, resources of more than one radio network controller will be used. There are three primary functions of the IUR interfaces: basic mobility management between radio network controllers, a service procedure supporting a common channel, and a service procedure supporting a dedicated channel. These service procedures are the most basic functions of the IUR interface, and radio network controllers of different manufacturers is necessarily able to implement the compatibility of these service procedures; otherwise, the interconnection and intercommunication between IUR interfaces can not be achieved at all.

The 3rd Generation Partnership Project (3GPP) introduces Dual Carrier High-speed Downlink Packet Access (DC-HSDPA) in Rel-8 to downlink bandwidth using two adjacent downlink carriers (a primary carrier and a secondary carrier). The primary carrier corresponds to a service High-Speed Downlink Shared Channel (HS-DSCH) cell, and the secondary carrier corresponds to a secondary service HS-DSCH cell. The primary carrier and the secondary carrier set respectively both the High-Speed Physical Downlink Shared Channel (HS-PDSCH) and High-Speed Shared Control Channel (HS-SCCH), and are independently scheduled. A UE having the ability of receiving the DC-HSDPA can receive HSDPA data on the downlink primary carrier and the downlink auxiliary carrier simultaneously.

In order to implement the DC-HSUPA function, as shown in Table 3, the radio network control entity allocates additional high-speed cell information radio link setup request information element to a NodeB having the ability of processing the DC-HSUPA via the Iub /Iur interface. The additional high-speed cell information radio link setup request information element is denoted as downlink secondary carrier information, which mainly includes a high-speed physical downlink shared channel radio link identifier, a cell identifier, high-speed downlink shared channel secondary service information and an aggregate maximum bit rate of the UE.

Table 3 Additional high-speed cell information radio link setup information element

| Information element/ group name | Existence | Range | Information element type and reference | Semantic Description | Key | Allocation key |
|---|---|---|---|---|---|---|
| Downlink secondary carrier information (Additional HS Cell Information RL Setup) | | Value range: 0~maximum number of HS-DSCH-1 | | For secondary service HS-DSCH, maximum is 1 in this version | Each is the same | Reject |
| >Radio link identifier (HS-PDSCH RL ID) | necessary | | RL ID 9.2.1.49 | | | |
| >Cell identifier (C-ID) | necessary | | 9.2.1.6 | | | |
| >HS-DSCH secondary serving information | necessary | | 9.2.2.19aa | | | |
| UE Aggregate maximum bit rate | Optional | | 9.2.1.137 | | Yes | Ignore |

3GPP introduces Dual Carrier High-speed Uplink Packet Access (DC-HSUPA) in Rel-9 to increase uplink bandwidth using two adjacent uplink carriers (a primary carrier and a secondary carrier). The uplink primary carrier and the uplink secondary carrier set their respective E-DCH Dedicated Physical Data Channel (E-DPDCH) and E-DCH Dedicated Physical Control Channel (E-DPCCH). The downlink primary carrier and the downlink secondary carrier set their respective E-DCH Absolute Grant Channel (E-AGCH), E-DCH Relative Grant Channel (E-RGCH) and E-DCH HARQ Acknowledgement Indicator Channel (E-HICH). The uplink primary carrier corresponds to the downlink primary carrier, and the uplink secondary carrier corresponds to the downlink secondary carrier. The primary carriers and the secondary carriers are independently scheduled respectively. A UE having the ability of sending the DC-HSUPA can send HSUPA data on the uplink primary carrier and the uplink secondary carrier simultaneously.

If one uplink carrier is allocated to a UE, the uplink carrier is the uplink primary carrier. When multiple uplink carries are allocated to the UE, the UE has a service enhanced data channel cell in the uplink primary carrier receiving absolute grant from the NodeB, and also has a service enhanced data channel cell in the uplink secondary carrier receiving the absolute grant from the NodeB. The bearer frequency transmitted by the service enhanced data channel cell corresponding to the service high-speed downlink shared channel cell is the uplink primary carrier. The radio link of the service high-speed downlink shared channel includes all physical channels allocated to the high-speed physical downlink shared channel of the UE, so the carrier corresponding to the radio link of the service high-speed physical downlink shared channel is the downlink primary carrier. Serving the service high-speed downlink shared channel cell is to send and receive the radio link of the service high-speed downlink shared channel for a certain UE. According to the definition of the uplink primary carrier, the uplink primary carrier corresponds to the downlink primary carrier.

A service high-speed downlink shared channel cell on the primary downlink frequency is referred to as a downlink primary cell. A service E-DCH cell on the primary uplink frequency is referred to as an uplink primary cell. A service high-speed downlink shared channel cell on the secondary downlink frequency is referred to as a downlink secondary cell. A cell in which the UE receives absolute grant from the NodeB on the downlink secondary carrier frequency is a secondary service E-DCH cell, which is also called as an uplink secondary cell. A carrier on the primary downlink frequency is referred to as a primary downlink carrier. A carrier on the primary uplink frequency is referred to as a primary uplink carrier. The carrier on the secondary downlink frequency is referred to as the secondary downlink carrier. A carrier on the secondary uplink frequency is referred to as a secondary uplink carrier.

In order to implement the DC-HSUPA function, as shown in Table 4, the radio network control entity allocates an additional enhanced data channel cell information radio link setup request to a NodeB having the ability of processing the DC-HSUPA. The additional enhanced data channel cell information radio link setup request mainly includes a multi-cell E-DCH transmission bearing mode and additional E-DCH cell information setup. As shown in Table 5, the additional E-DCH cell information setup includes additional E-DCH frequency division duplexing (FDD) setup information and multi-cell E-DCH information. The additional E-DCH FDD set information is comprised of uplink dedicated physical channel information, information specific to setup of the additional E-DCH radio link, additional E-DCH FDD information and F-DPCH information. As shown in Table 6, the information specific to setup of the additional E-DCH radio link is E-DCH additional radio link-specific information, which is denoted as uplink secondary carrier information. The uplink secondary carrier information contains E-DCH additional radio link-specific information entry 1 and E-DCH additional radio link-specific information entry 2. The E-DCH additional radio link-specific information entry 1 contains an E-DCH additional radio link identifier, a cell identifier, the first radio link set indication, propagation delay, initial downlink transmission power, primary common pilot control channel signal to noise ratio, downlink channel power offsets, and additional E-DCH media access control dedicated stream-specific information. The E-DCH additional radio link-specific information entry 2 is multi-cell E-DCH radio link-specific information.

For an uplink dual-carrier system, there are only one downlink secondary carrier and one uplink secondary carrier, which may be paired directly, because the downlink secondary cell is the uplink secondary cell.

With the development of technologies, it is desirable that the multi-carrier high-speed downlink packet access technology (which enables the UE to send data with the high-speed downlink packet access technology on two or more carriers such that the downlink data rate can be doubled, and the number of corresponding uplink carriers may be one to four) is introduced into the existing system.

For the multi-carrier high-speed downlink packet access technology, there are at least two downlink secondary carriers in addition to the downlink primary carrier, and there are at most three downlink secondary carriers, and thus, the uplink secondary cell can not be determined according to the downlink secondary cell. Therefore, the uplink secondary carrier is unaware which downlink secondary carrier the uplink secondary cell is paired with. Thus, the NodeB does not know to send scheduling information to the UE on which downlink secondary carrier such that resource scheduling for the system and UE can not be completed.

Table 4 Additional E-DCH cell information radio link (RL) setup request

| Information element/ group name | Existence | Range | Information element type and reference | Semantic Description | Key | Allocation key |
|---|---|---|---|---|---|---|
| Additional E-DCH cell information RL setup request | | Value range: 0..1 | | for multi-frequency E-DCH on a drift radio network controller | Yes | Reject |
| >Multi-cell E-DCH transmission bearing mode | Necessary | | 9.2.2.113 | | | |
| >Additional E-DCH cell information setup | | Value range : 1..<maxnoofEDCH-1> | | E-DCH on secondary uplink frequency -maximum is 1 in this 3GPP version | | |
| >>Additional E-DCH FDD setup information | Necessary | | 9.2.2.110 | | Yes | Reject |
| >>Multi-cell E-DCH information | Optional | | 9.2.2.114 | | Yes | Reject |

Table 5 Additional E-DCH FDD setup information

| Information element/group name | Existence | Range | Information element type and reference | Semantic Description |
|---|---|---|---|---|
| Uplink DPCH information | | 1 | | |
| >Uplink scrambling code | Necessary | | 9.2.2.53 | |
| >Uplink signal to noise ratio target value | Optional | | Uplink signal to noise ratio 9.2.1.69 | |
| For setting up additional E-DCH radio link-specific information | Necessary | | 9.2.2.115 | |
| Additional E-DCH FDD information | Optional | | 9.2.2.112 | |
| Part of dedicated physical channel information | | 1 | | |
| >frequency FDD transmission power control downlink step length | Necessary | | 9.2.2.16 | |
| >Limited power increase | Necessary | | 9.2.2.21A | |
| >Inner-loop downlink power control state | Necessary | | 9.2.2.21a | |
| >F-DPCH time slot format support request | Optional | | 9.2.2.86 | |

Table 6 Uplink secondary carrier information

| Information element/group name | Existence | Range | Information element type and reference | Semantic Description | Key | Allocation Key |
|---|---|---|---|---|---|---|
| E-DCH additional radio link setup information | | 1..<maxnoofE DCHRLs> | | | Yes | Notify |
| >E-DCH additional radio link-specific information entry 1 | Necessary | | | | Yes | Notify |
| >>E-DCH additional radio link identifier | Necessary | | RL ID 9.2.1.49 | | - | |
| >>Cell identifier | Necessary | | 9.2.1.6 | | - | |
| >>The first radio link set indication | Necessary | | 9.2.2.16A | | - | |
| >>Propagation delay | Optional | | 9.2.2.33 | | - | |
| >>Initial downlink transmission power | Optional | | DL Power 9.2.1.21A | | - | |
| >>Primary common pilot control channel Ec/No | Optional | | 9.2.2.32 | | - | |
| >>E-AGCH power offset value | Optional | | 9.2.2.61 | | - | |
| >>E-RGCH power offset value | Optional | | 9.2.2.62 | | - | |
| >>E-HICH power offset value | Optional | | 9.2.2.63 | | - | |
| >>additional E-DCH MAC-d stream-specific information | Optional | | 9.2.2.118 | | - | |
| >E-DCH additional radio link-specific information entry 2 | Optional | | Multi-cell E-DCH radio link-specific information 9.2.2.119 | | Yes | Ignore |

Summary of the Invention

The technical problem to be solved by the invention is to provide a method for transferring and acquiring pairing information of secondary carriers when data is sent and received through two uplink carriers or three or four downlink carriers so as to solve the problem that for a specified UE, when there are more than two downlink carriers, a NodeB is unaware that on which downlink secondary carrier scheduling information should be sent to the UE.

In order to solve the above problem, the present invention provides a method for transferring and acquiring pairing information of secondary carriers comprising: for a specified user equipment (UE), a serving radio network controller configuring pairing information of an uplink secondary carrier and a downlink secondary carrier of an uplink secondary cell, and sending the pairing information of the uplink secondary carrier and the downlink secondary carrier of the uplink secondary cell in multiple carriers of the UE to a NodeB through control signaling, or sending the pairing information of the uplink secondary carrier and the downlink secondary carrier to a drift radio network controller through the control signaling, the drift radio network controller sending the pairing information of the uplink secondary carrier and the downlink secondary carrier to the NodeB.

Preferably, the method may be further characterized in that the control signaling is a radio link setup request message or a radio link reconfiguration preparation message.

Preferably, the method may be further characterized in that when the serving radio network controller sends the pairing information to the NodeB through the control signaling or sends the pairing information to the drift radio network controller through the control signaling, and the drift radio network controller sends the pairing information to the NodeB, the serving radio network controller carries the pairing information of the uplink secondary carrier and the downlink secondary carrier in the control signaling in one of the following ways (a) to (d):

(a) the pairing information of the uplink secondary carrier and the downlink secondary carrier is associated with a cell identifier of the uplink secondary cell; the uplink secondary cell identifier is added to uplink secondary carrier information and/or downlink secondary carrier information carried in the control signaling, wherein the uplink secondary cell identifier is used to indicate whether a cell is an uplink secondary cell, and when the uplink secondary cell identifier in the uplink secondary carrier information and/or downlink secondary carrier information indicates that the cell is an uplink secondary cell, an uplink secondary carrier and a downlink secondary carrier of a cell corresponding to the cell identifier contained in the uplink secondary carrier information or downlink secondary carrier information are the paired uplink secondary carrier and downlink secondary carrier;

(b) the pairing information of the uplink secondary carrier and the downlink secondary carrier is associated with a radio link identifier of the uplink secondary cell; an uplink secondary cell identifier is added to uplink secondary carrier information and/or downlink secondary carrier information, wherein the uplink secondary cell identifier is used to indicate whether a cell is an uplink secondary cell, and when the uplink secondary cell identifier in the uplink secondary carrier information and/or downlink secondary carrier information indicates that the cell is an uplink secondary cell, an uplink secondary carrier and a downlink secondary carrier of a radio link corresponding to the radio link identifier contained in the uplink secondary carrier information or downlink secondary carrier information are the paired uplink secondary carrier and downlink secondary carrier;

(c) the pairing information of the uplink secondary carrier and the downlink secondary carrier is associated with downlink secondary carrier indication information of the uplink secondary cell; the downlink secondary carrier indication information of the uplink secondary cell is added to uplink secondary carrier information, wherein the downlink secondary carrier indication information is used to indicate a downlink secondary carrier; the downlink secondary carrier indicated by the downlink secondary carrier indication information carried in the uplink secondary carrier information is the downlink secondary carrier paired with the uplink secondary carrier, and the downlink secondary carrier indication information includes frequency point information of the downlink secondary carrier or identifier information of the downlink secondary carrier; and

(d) uplink secondary carrier frequency point information of the uplink secondary cell is added to downlink secondary carrier information, and the pairing information of the uplink secondary carrier and the downlink secondary carrier is associated with the uplink secondary carrier frequency point information of the uplink secondary cell; when the uplink secondary carrier frequency point information of the uplink secondary cell carried in the downlink secondary carrier information is not empty, the downlink secondary carrier corresponding to the downlink secondary carrier information and the uplink secondary carrier corresponding to the uplink secondary carrier frequency point information of the uplink secondary cell carried in the downlink secondary carrier information are the paired downlink secondary carrier and uplink secondary carrier.

Preferably, the method may be further characterized in that it further comprises:

the pairing information of the uplink secondary carrier and the downlink secondary carrier being associated with the radio link identifier or the cell identifier of the uplink secondary cell; configuring the uplink secondary carrier and the downlink secondary carrier corresponding to the radio link identifier or the cell identifier as the paired uplink secondary carrier and downlink secondary carrier through the serving radio network controller and the drift radio network controller, or through background of the NodeB.

Preferably, the method may be further characterized in that it further comprises: after receiving the control signaling, the drift radio network controller or the NodeB checking whether the pairing information of the uplink secondary carrier and the downlink secondary carrier in the control signaling is valid.

Preferably, the method may be further characterized in that it further comprises: the serving radio network controller carrying the downlink secondary carrier information in the control signaling, and carrying carrier identifier information in the downlink secondary carrier information to indicate which downlink secondary carrier the downlink secondary carrier information belongs to, wherein the carrier identifier information is carried using an additional high-speed cell information radio link setup information element or newly added secondary carrier identifier information element or newly added secondary carrier frequency point information information-element.

The present invention further provides a system for transferring and acquiring pairing information of secondary carriers comprising a serving radio network controller configured to, for a specified user equipment (UE), configure pairing information of an uplink secondary carrier and a downlink secondary carrier of an uplink secondary cell, and send the pairing information of the uplink secondary carrier and the downlink secondary carrier of the uplink secondary cell in multiple carriers of the UE to a NodeB through control signaling, or send the pairing information of the uplink secondary carrier and the downlink secondary carrier to a drift radio network controller through the control signaling, the drift radio network controller sending the pairing information of the uplink secondary carrier and the downlink secondary carrier to the NodeB.

Preferably, the system may be further characterized in that the control signaling is a radio link setup request message or a radio link reconfiguration preparation message.

Preferably, the system may be further characterized in that the serving radio network controller is configured to carry the pairing information of the uplink secondary carrier and the downlink secondary carrier in the control signaling in one of the following ways (a) to (d):

(a) the pairing information of the uplink secondary carrier and the downlink secondary carrier is associated with a cell identifier of the uplink secondary cell; the uplink secondary cell identifier is added to uplink secondary carrier information and/or downlink secondary carrier information carried in the control signaling, wherein the uplink secondary cell identifier is used to indicate whether a cell is an uplink secondary cell, and when the uplink secondary cell identifier in the uplink secondary carrier information and/or downlink secondary carrier information indicates that the cell is an uplink secondary cell, an uplink secondary carrier and a downlink secondary carrier of a cell corresponding to the cell identifier contained in the uplink secondary carrier information or downlink secondary carrier information are the paired uplink secondary carrier and downlink secondary carrier;

(b) the pairing information of the uplink secondary carrier and the downlink secondary carrier is associated with a radio link identifier of the uplink secondary cell; an uplink secondary cell identifier is added to uplink secondary carrier information and/or downlink secondary carrier information, wherein the uplink secondary cell identifier is used to indicate whether a cell is an uplink secondary cell, and when the uplink secondary cell identifier in the uplink secondary carrier information and/or downlink secondary carrier information indicates that the cell is an uplink secondary cell, an uplink secondary carrier and a downlink secondary carrier of a radio link corresponding to the radio link identifier contained in the uplink secondary carrier information or downlink secondary carrier information are the paired uplink secondary carrier and downlink secondary carrier;

(c) the pairing information of the uplink secondary carrier and the downlink secondary carrier is associated with downlink secondary carrier indication information of the uplink secondary cell; the downlink secondary carrier indication information of the uplink secondary cell is added to uplink secondary carrier information, wherein the downlink secondary carrier indication information is used to indicate a downlink secondary carrier; the downlink secondary carrier indicated by the downlink secondary carrier indication information carried in the uplink secondary carrier information is the downlink secondary carrier paired with the uplink secondary carrier, and the downlink secondary carrier indication information includes frequency point information of the downlink secondary carrier or identifier information of the downlink secondary carrier; and

(d) uplink secondary carrier frequency point information of the uplink secondary cell is added to downlink secondary carrier information, and the pairing information of the uplink secondary carrier and the downlink secondary carrier is associated with the uplink secondary carrier frequency point information of the uplink secondary cell; when the uplink secondary carrier frequency point information of the uplink secondary cell carried in the downlink secondary carrier information is not empty, the downlink secondary carrier corresponding to the downlink secondary carrier information and the uplink secondary carrier corresponding to the uplink secondary carrier frequency point information of the uplink secondary cell carried in the downlink secondary carrier information are the paired downlink secondary carrier and uplink secondary carrier.

Preferably, the system may be further characterized in that the drift radio network controller or the NodeB is configured to check whether the pairing information of the uplink secondary carrier and the downlink secondary carrier in the control signaling is valid after receiving the control signaling.

Preferably, the system may be further characterized in that the serving radio network controller is further configured to carry the downlink secondary carrier information in the control signaling, and carry carrier identifier information in the downlink secondary carrier information to indicate which downlink secondary carrier the downlink secondary carrier information belongs to, wherein the carrier identifier information is carried using an additional high-speed cell information radio link setup information element or newly added secondary carrier identifier information element or newly added secondary carrier frequency point information information-element.

In conclusion, the present invention provides a method for transferring and acquiring pairing information of secondary carriers. In the method, for a specified UE, a radio network controller configures a carrier identifier and pairing information of an uplink secondary carrier and a downlink secondary carrier and sends the pairing information of the uplink and downlink carriers to a NodeB such that the NodeB can obtain the pairing information of the secondary carriers to solve the problem of sending and acquiring of scheduling information of the uplink secondary carrier of a UE.

Brief Description of Drawings

FIG.1 is a schematic diagram of a specific carrier in accordance with the first embodiment of the invention;

FIG.2 is a schematic diagram of a specific processing procedure in accordance with the first embodiment of the invention;

FIG.3 is a schematic diagram of a specific processing procedure in accordance with the second embodiment of the invention;

FIG.4 is a schematic diagram of a specific carrier in accordance with the third embodiment of the invention;

FIG.5 is a schematic diagram of a specific processing procedure in accordance with the third embodiment of the invention;

FIG.6 is a schematic diagram of a specific processing procedure in accordance with the fourth embodiment of the invention;

FIG.7 is a schematic diagram of a specific carrier in accordance with the fifth embodiment of the invention;

FIG.8 is a schematic diagram of a specific processing procedure in accordance with the fifth embodiment of the invention;

FIG.9 is a schematic diagram of a specific processing procedure in accordance with the sixth embodiment of the invention;

FIG.10 is a schematic diagram of a specific processing procedure in accordance with the seventh embodiment of the invention;

FIG.11 is a schematic diagram of a specific carrier in accordance with the eighth embodiment of the invention;

FIG.12 is a schematic diagram of a specific processing procedure in accordance with the eighth embodiment of the invention; and

FIG.13 is a schematic diagram of a specific processing procedure in accordance with the ninth embodiment of the invention.

Preferred Embodiments of the Present Invention

The implementation of the technical scheme of the invention is further described in detail below in conjunction with the accompanying drawings and embodiments.

The present invention provides a method for transferring and acquiring pairing information of secondary carriers when data is sent through two uplink carriers or three or four downlink carriers. In the method, for a specified UE, a radio network controller configures pairing information of an uplink secondary carrier and a certain downlink secondary carrier of an uplink secondary cell, and sends the pairing information to a NodeB through control signaling of the Iub/Iur interface, such as a radio link setup message or reconfiguration preparation message, such that the NodeB can obtain the pairing information of the secondary carriers.

The method for transferring and acquiring pairing information of secondary carriers in accordance with the present invention comprises the following steps.

In step S10, for a specified UE, a serving radio network controller configures pairing information of an uplink secondary carrier and a downlink secondary carrier of an uplink secondary cell, sends the pairing information of the uplink secondary carrier and the downlink secondary carrier of the uplink secondary cell in multiple carriers of the UE to a NodeB through control signaling, or sends the pairing information of the uplink secondary carrier and the downlink secondary carrier to a drift radio network controller through the control signaling, the drift radio network controller sending the pairing information of the uplink secondary carrier and the downlink secondary carrier to the NodeB.

In step S20, for the specified UE, after receiving the pairing information of the uplink secondary carrier and the downlink secondary carrier of the uplink secondary cell in the multiple carriers of the UE, the drift radio network controller or the NodeB determines whether the pairing information is valid according to a certain rule. If the pairing information is valid and has been changed, the drift radio network controller or the NodeB stores the valid pairing information; if the pairing information is invalid, the drift radio network controller or the NodeB ignores the pairing information.

The two uplink carriers are an uplink primary carrier and an uplink secondary carrier; the three downlink carriers are a downlink primary carrier, the first downlink secondary carrier and the second downlink secondary carrier; and the four downlink carriers are a downlink primary carrier, the first downlink secondary carrier, the second downlink secondary carrier and the third downlink secondary carrier.

In step S10, furthermore, the serving radio network controller carries the downlink secondary carrier information in the control signaling, and carries carrier identifier information in the downlink secondary carrier information to indicate which downlink secondary carrier the downlink secondary carrier information belongs to. Specifically, the carrier identifier information may be carried in the following ways.

1) An additional high-speed cell information radio link setup information element may be used to carry the carrier identifier information. For example, the maximum number of high-speed downlink shared channels in the additional high-speed cell information radio link setup information element may be set to be 3, wherein the additional high-speed cell information radio link setup information element with the value being 0 corresponds to the first downlink secondary carrier, the additional high-speed cell information radio link setup information element with the value being 1 corresponds to the second downlink secondary carrier, and the additional high-speed cell information radio link setup information element with the value being 2 corresponds to the third downlink secondary carrier.

2) Or a secondary carrier identifier information element or secondary carrier frequency point information information-element is added to the downlink secondary carrier information, i.e. the secondary carrier identifier information element or secondary carrier frequency point information information-element is added to the downlink secondary carrier information in the multiple carriers of the UE. For example, the secondary carrier identifier information element with the value being 0 corresponds to the first downlink secondary carrier, the secondary carrier identifier information element with the value being 1 corresponds to the second downlink secondary carrier, and the secondary carrier identifier information element with the value being 2 corresponds to the third downlink secondary carrier. The values are not limited in the invention, and are only exemplary here.

3) Or the downlink secondary carrier may use a specific frequency information value configured by the serving radio network controller and drift radio network controller or the background of the NodeB as an identifier of the carrier.

In step S10, furthermore, in the case that uplink frequencies of all cells are the same or different, the serving radio network controller carries the pairing information of the uplink secondary carrier and the downlink secondary carrier in the control signaling in one of the following ways (a) to (d).

(a) The pairing information of the uplink secondary carrier and the downlink secondary carrier in the multiple carriers of the UE may be associated with an cell identifier of the uplink secondary cell, i.e. the uplink secondary cell identifier is added to uplink secondary carrier information and/or the uplink secondary cell identifier is added to downlink secondary carrier information, wherein the secondary cell identifier is used to indicate whether a cell is an uplink secondary cell, and when the uplink secondary cell identifier in the uplink secondary carrier information and/or downlink secondary carrier information indicates the cell is an uplink secondary cell, an uplink secondary carrier and a downlink secondary carrier of a cell corresponds to the cell identifier contained in the uplink secondary carrier information and/or downlink secondary carrier information are the paired uplink secondary carrier and downlink secondary carrier; and the cell identifier corresponding to the uplink secondary cell identifier contained in the uplink secondary carrier information is equivalent to a certain cell identifier contained in the downlink secondary carrier information, and/or a certain cell identifier contained in the uplink secondary carrier information is equivalent to the cell identifier corresponding to the uplink secondary cell identifier contained in the downlink secondary carrier information.

(b) Or the pairing information of the uplink secondary carrier and the downlink secondary carrier in the multiple carriers of the UE may be associated with a radio link identifier corresponding to the uplink secondary cell identifier, i.e. the uplink secondary cell identifier is added to the uplink secondary carrier information and/or the uplink secondary cell identifier is added to the downlink secondary carrier information, wherein the uplink secondary cell identifier is used to indicate whether a cell is an uplink secondary cell, and when the uplink secondary cell identifier in the uplink secondary carrier information and/or downlink secondary carrier information indicates that the cell is an uplink secondary cell, an uplink secondary carrier and a downlink secondary carrier of a radio link corresponding to the radio link identifier contained in the uplink secondary carrier information and/or downlink secondary carrier information are the paired uplink secondary carrier and downlink secondary carrier; and the radio link identifier corresponding to the uplink secondary cell identifier contained in the uplink secondary carrier information is equivalent to a certain radio link identifier contained in the downlink secondary carrier information, and/or a certain radio link identifier contained in the uplink secondary carrier information is equivalent to the radio link identifier corresponding to the uplink secondary cell identifier contained in the downlink secondary carrier information.

(c) The pairing information of the uplink secondary carrier and the downlink secondary carrier is associated with downlink secondary carrier indication information of the uplink secondary cell; the downlink secondary carrier indication information of the uplink secondary cell is added to the uplink secondary carrier information, and the indication information is used to indicate a downlink secondary carrier; the downlink secondary carrier indicated by the downlink secondary carrier indication information carried in the uplink secondary carrier information is the downlink secondary carrier paired with the uplink secondary carrier, and the downlink secondary carrier indication information includes frequency point information of the downlink secondary carrier or identifier information of the downlink secondary carrier.

For example, the pairing information of the uplink secondary carrier and the downlink secondary carrier in the multiple carriers of the UE may also be a downlink secondary carrier frequency point of the uplink secondary cell, i.e. the downlink secondary carrier frequency point information is added to the uplink secondary carrier information.
Or the pairing information of the uplink secondary carrier and the downlink secondary carrier in the multiple carriers of the UE may also be the secondary carrier identifier corresponding to the downlink secondary carrier of the uplink secondary cell, i.e. the secondary carrier identifier corresponding to the downlink secondary carrier of the uplink secondary cell is added to the uplink secondary carrier information.

(d) Uplink secondary carrier frequency point information of the uplink secondary cell is added to the downlink secondary carrier information, and the pairing information of the uplink secondary carrier and the downlink secondary carrier is associated with the uplink secondary carrier frequency point information of the uplink secondary cell; when the uplink secondary carrier frequency point information of the uplink secondary cell carried in the downlink secondary carrier information is not empty, the downlink secondary carrier corresponding to the downlink secondary carrier information and the uplink secondary carrier corresponding to the uplink secondary carrier frequency point information of the uplink secondary cell carried in the downlink secondary carrier information are the paired downlink secondary carrier and uplink secondary carrier.

Or the pairing information of the uplink secondary carrier and the downlink secondary carrier in the multiple carriers of the UE may also be binding of the paired uplink and downlink frequency information of the uplink secondary cell to the cell identifier or radio link identifier of the uplink secondary cell by background configuration. That is, the pairing information of the uplink secondary carrier and the downlink secondary carrier is associated with the cell identifier of the uplink secondary cell; the uplink secondary carrier and the downlink secondary carrier corresponding to the radio link identifier or the cell identifier are configured as the paired uplink secondary carrier and downlink secondary carrier through the serving radio network controller and the drift radio network controller, or through background of the NodeB.

Or a downlink secondary carrier corresponding to a determined carrier identifier may be specified to be the downlink secondary carrier of the uplink secondary cell; for example, the downlink secondary carrier with the carrier identifier being 0 is specified to be the downlink secondary carrier of the uplink secondary cell.

In step S10, furthermore, in the case that the uplink frequencies of all the cells are different, the pairing information of the uplink secondary carrier and the downlink secondary carrier in the multiple carriers of the UE may be associated with the cell identifier, and the cell identifier contained in the uplink secondary carrier information is equivalent to the cell identifier contained in the downlink secondary carrier information; or the pairing information of the uplink secondary carrier and the downlink secondary carrier in the multiple carriers of the UE may be associated with the radio link identifier, i.e. the radio link identifier contained in the uplink secondary carrier information is equivalent to the radio link identifier contained in the downlink secondary carrier information;

In step S10, furthermore, the control signaling is a radio link setup request message or reconfiguration preparation message.

In step S10, furthermore, the downlink secondary carrier of the uplink secondary cell may be the first downlink secondary carrier, or the second downlink secondary carrier, or the third downlink secondary carrier.

In step S10, furthermore, the downlink secondary carrier of the uplink secondary cell is denoted as the first-layer downlink secondary carrier, the other one or two secondary carriers are denoted in turn as the second-layer downlink secondary carrier and the third-layer downlink secondary carrier.

In step S20, furthermore, the rule may be that whether the association information of the uplink secondary carrier and the paired downlink secondary carrier is identical, if yes, it is shown that the configuration is valid, and the pairing information is stored when the configuration is valid and the association information is changed; otherwise, it is shown that the configuration is invalid.

The first embodiment

The embodiment provides a method for transferring and acquiring pairing information of an uplink secondary carrier and downlink secondary carrier associated with a cell identifier of a uplink secondary cell when data is sent and received through two uplink carriers and three downlink carriers and uplink frequencies of two secondary cells are the same.

In this embodiment, carrier identifier information is carried using a downlink secondary carrier information information-element (i.e. additional high-speed cell information radio link setup information element, downlink secondary carrier information information-element for short hereafter), i.e., different values of the downlink secondary carrier information information-element represent different downlink secondary carriers. For example, the radio network controller configures that the downlink secondary carrier information information-element with the value being 0 corresponds to the downlink primary carrier, the downlink secondary carrier information information-element with the value being 1 corresponds to the first downlink secondary carrier, and the downlink secondary carrier information information-element with the value being 2 corresponds to the second downlink secondary carrier. Other values may be used to represent different downlink secondary carriers, and are not limited in the present invention. An uplink secondary cell identifier information element is added to the downlink secondary carrier information information-element to indicate whether a downlink secondary cell corresponding to the downlink secondary carrier indicated in the downlink secondary carrier information element is an uplink secondary cell, as shown in Table 7. The value of the uplink secondary cell identifier information element in Table 7 may be 0 or 1, or other values, as long as they can indicate accurately whether a cell is an uplink secondary cell.

Table 7 Uplink secondary cell identifier information element is added to downlink secondary carrier information information-element

| Information element/ group name | Existence | Range | Information element type and reference | Semantic Description | Key | Allocation key |
|---|---|---|---|---|---|---|
| Downlink secondary carrier information (Additional HS Cell Information RL Setup) | | Value range: 0~maximum number of HS-DSCH-3 | | For secondary service HS-DSCH, maximum is 1 in this version | Each is the same | Reject |
| >Radio link identifier (HS-PDSCH RL ID) | Necessary | | RL ID 9.2.1.49 | | - | |
| >Cell identifier (C-ID) | Necessary | | 9.2.1.6 | | - | |
| Uplink secondary cell identifier (newly added in the invention) | Optional | 0, 1 | | 0 represents non-uplink secondary cell, and 1 represents uplink | | |
| | | | | secondary cell | | |
| >HS-DSCH secondary serving information | Necessary | | 9.2.2.19aa | | - | |
| UE aggregate maximum bit rate | Optional | | 9.2.1.137 | | Yes | Ignore |

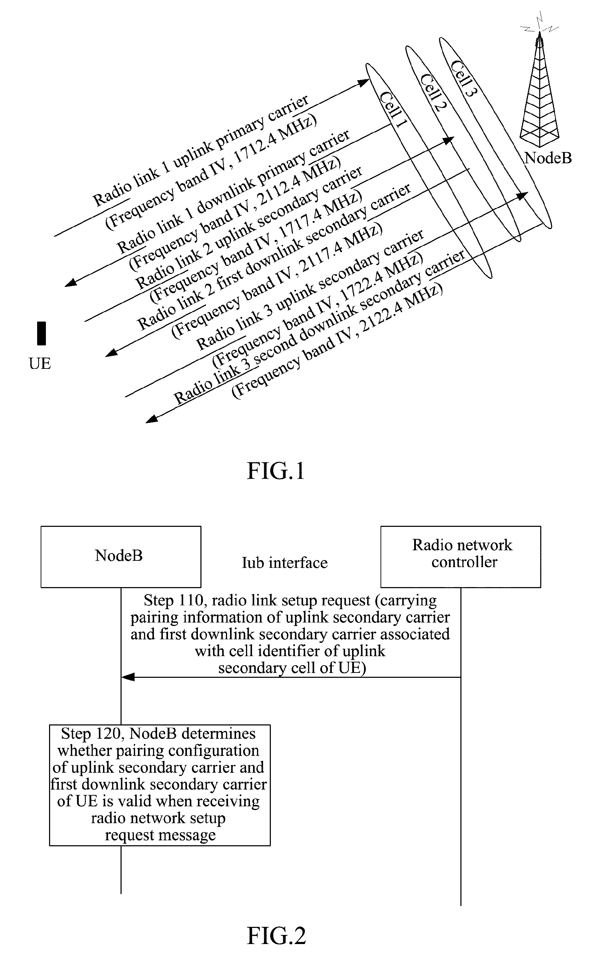

A scene where both the two uplink carriers and the three downlink carriers belong to the same operating frequency band IV is set. The UARFCN of the uplink primary carrier is 1312 (1712.4 MHz), the UARFCN of the uplink secondary carrier is 1337 (1717.4 MHz), and the uplink primary carrier and the uplink secondary carrier are adjacent carriers within the operating frequency band IV. The UARFCN of the downlink primary carrier is 1537 (2112.4 MHz), the UARFCN of the first downlink secondary carrier is 1562 (2117.4 MHz), the UARFCN of the second downlink secondary carrier is 1587 (2122.4 MHz), and the downlink primary carrier, the first downlink carrier and the second downlink carrier are adjacent carriers within the operating frequency band IV. The uplink primary carrier and the downlink primary carrier compose a cell with the cell identifier being 1, and their wireless link identifier is 1; the first downlink secondary carrier and the uplink secondary carrier compose a cell with the cell identifier being 2, and their wireless link identifier is 2; and the second downlink secondary carrier and the uplink secondary carrier compose a cell with the identifier being 3 and their wireless link identifier is 3, as shown in Fig. 1.

As shown in FIG.2, in this embodiment, the method for transferring and acquiring pairing information of secondary carriers comprises the following steps.

In step 110, for a UE, 1 the uplink secondary cell identifier information element of 1 (representing the uplink secondary cell) and the cell identifier of 2 are filled in the downlink secondary carrier information with the value of the downlink secondary carrier information information-element being 1 (corresponding to the first downlink secondary carrier); then a radio network controller sends a radio link setup request message carrying the pairing information of the uplink secondary carrier and the downlink secondary carrier of the UE to a NodeB, wherein the pairing information is associated with the cell identifier 2 of the uplink secondary cell, and the message is sent via the IUB interface through the NBAP layer.

In step 120, the NodeB determines whether the paring configuration of the uplink secondary carrier and the first downlink secondary carrier of the UE is valid when receiving the radio network setup request message.

The specific determining method comprises determining whether the cell identifier contained in the uplink secondary carrier information is equivalent to the cell identifier (the cell identifier is 2 in this embodiment) contained in the downlink secondary carrier information with the uplink secondary carrier identifier information element being 1; if yes, the uplink and downlink frequency point information corresponding to the cell identifier 2 is the uplink secondary carrier and the downlink secondary carrier of the UE, the paring configuration of the uplink secondary carrier and the first downlink secondary carrier is valid, and the related configuration information is updated and stored; otherwise, the uplink and downlink frequency point information corresponding to the cell identifier 2 is not the uplink secondary carrier and the downlink secondary carrier of the UE, the paring configuration of the uplink secondary carrier and the first downlink secondary carrier is invalid, and the original configuration information is maintained.

The second embodiment

The embodiment provides a method for transferring and acquiring pairing information of an uplink secondary carrier and downlink secondary carrier associated with a radio link identifier of a uplink secondary cell when data is sent and received through two uplink carriers and three downlink carriers and uplink frequencies of two secondary cells are the same.

In this embodiment, carrier identifier information is carried using a downlink secondary carrier information information-element, i.e., different values of the downlink secondary carrier information information-element represent different downlink secondary carriers. For example, the radio network controller configures that the downlink secondary carrier information information-element with the value being 0 corresponds to the downlink primary carrier, the downlink secondary carrier information information-element with the value being 1 corresponds to the first downlink secondary carrier, and the downlink secondary carrier information information-element with the value being 2 corresponds to the second downlink secondary carrier. Other values may be used to represent different downlink secondary carriers, and are not limited in the present invention. The uplink secondary cell identifier information element of 1 and the radio link identifier of 3 are filled in the downlink secondary carrier information with the value of the downlink secondary carrier information information-element being 2. The uplink secondary cell identifier information element is added to the uplink secondary carrier information, as shown in Table 8. The value of the uplink secondary cell identifier information element in Table 7 may be 0 or 1, or other values, as long as they can indicate accurately whether a cell is an uplink secondary cell.

A scene the same as that in the first embodiment is set.

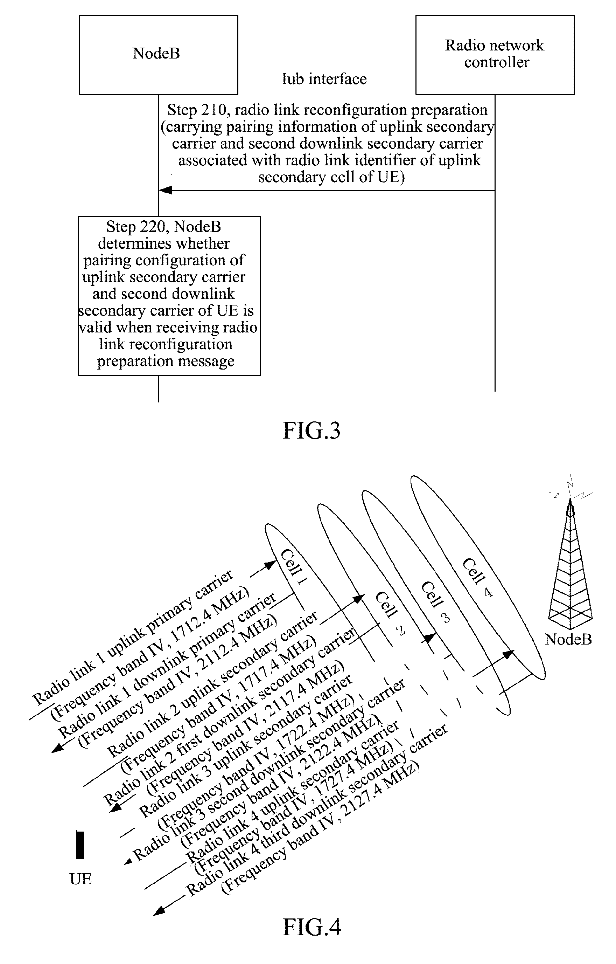

As shown in FIG.3, in this embodiment, the method for transferring and acquiring pairing information of secondary carriers comprises the following steps.

In step 210, for a UE, the uplink secondary cell identifier information element of 1 (representing the uplink secondary cell) and the radio link identifier of 3 are filled in the downlink secondary carrier information with the value of the downlink secondary carrier information information-element being 2 (corresponding to the second downlink secondary carrier); a radio network controller sends a radio link reconfiguration preparation message carrying the pairing information of the uplink secondary carrier and the downlink secondary carrier of the UE to a NodeB, wherein the pairing information is associated with the radio link identifier 3 of the uplink secondary cell, and the message is sent via the IUB interface through the NBAP layer.

In step 220, the NodeB determines whether the paring configuration of the uplink secondary carrier and the second downlink secondary carrier of the UE is valid when receiving the radio link reconfiguration preparation message.

The specific determining method comprises determining whether the radio link identifier contained in the downlink secondary carrier information of the downlink secondary carrier is equivalent to the radio link identifier contained in the uplink secondary carrier information with the uplink secondary carrier identifier being 1; if yes, the paring configuration of the uplink secondary carrier and the second downlink secondary carrier of the UE is valid, and the related configuration information is updated and stored; otherwise, the paring configuration of the uplink secondary carrier and the second downlink secondary carrier of the UE is invalid and the original configuration information is maintained.

Table 8 Uplink secondary cell identifier information element is added to uplink secondary carrier information

| Information element/group name | Existence | Range | Information element type and reference | Semantic Description | Key | Allocation Key |
|---|---|---|---|---|---|---|
| Additional E-DCH cell information RL setup request | | Value range: 0..1 | | For multi-frequency E-DCH on a drift radio network controller | Yes | Reject |
| >Multiple-cell E-DCH transmission bearing mode | Necessary | | 9.2.2.113 | | | |
| >Additional E-DCH cell information setup | | ValUE range: 1..<maxnoof EDCH-1> | | E-DCH on the secondary uplink frequency - the maximum is 1 in the 3GPP version | | |
| >>Additional E-DCH FDD setup information | Necessary | | 9.2.2.110 | | Yes | Reject |
| >>Multi-cell E-DCH Information | Optional | | 9.2.2.114 | | Yes | Reject |
| >>Uplink secondary cell identifier | Optional | 0, 1 | | 0 represents non-uplink secondary cell, and 1 represents uplink secondary cell | | |

The third embodiment

The embodiment provides a method for transferring and acquiring pairing information of an uplink secondary carrier and downlink secondary carrier associated with a frequency point corresponding to the downlink secondary carrier identified by an uplink secondary cell when data is sent and received through two uplink carriers and four downlink carriers and uplink frequencies of three secondary cells are the same.

In this embodiment, a downlink radio link frequency point identifier information element of the uplink secondary cell for carrying a frequency point of the downlink secondary carrier corresponding to the uplink secondary cell is added to the uplink secondary carrier information; and a secondary carrier identifier information element is added to the downlink secondary carrier information to indicate which secondary carrier, as shown in Table 9 (a) and 9 (b), is the modified uplink secondary carrier information and downlink secondary carrier information. The secondary carrier identifier information element with the value being 0 represents the first downlink secondary carrier, the secondary carrier identifier information element with the value being 1 represents the second downlink secondary carrier, and the secondary carrier identifier information element with the value being 2 represents the third downlink secondary carrier.

A scene where both the two uplink carriers and the four downlink carriers belong to the same operating frequency band IV is set. The UARFCN of the uplink primary carrier is 1312 (1712.4 MHz), the UARFCN of the uplink secondary carrier is 1337 (1717.4 MHz), and the uplink primary carrier and the uplink secondary carrier are adjacent carriers within the operating frequency band IV. The UARFCN of the downlink primary carrier is 1537 (2112.4 MHz), the UARFCN of the first downlink secondary carrier is 1562 (2117.4 MHz), the UARFCN of the second downlink secondary carrier is 1587 (2122.4 MHz), the UARFCN of the third downlink secondary carrier is 1612 (2127.4 MHz), and the downlink primary carrier, the first downlink carrier, the second downlink carrier and the third downlink carrier are adjacent carriers within the operating frequency band IV. The uplink primary carrier and the downlink primary carrier compose a cell with the cell identifier being 1, and their wireless link identifier is 1; the first downlink secondary carrier and the uplink secondary carrier compose a cell with the cell identifier being 2, and their wireless link identifier is 2; the second downlink secondary carrier and the uplink secondary carrier compose a cell with the identifier being 3 and their wireless link identifier is 3; and the third downlink secondary carrier and the uplink secondary carrier compose a cell with the identifier being 4 and their wireless link identifier is 4, as shown in Fig. 4.

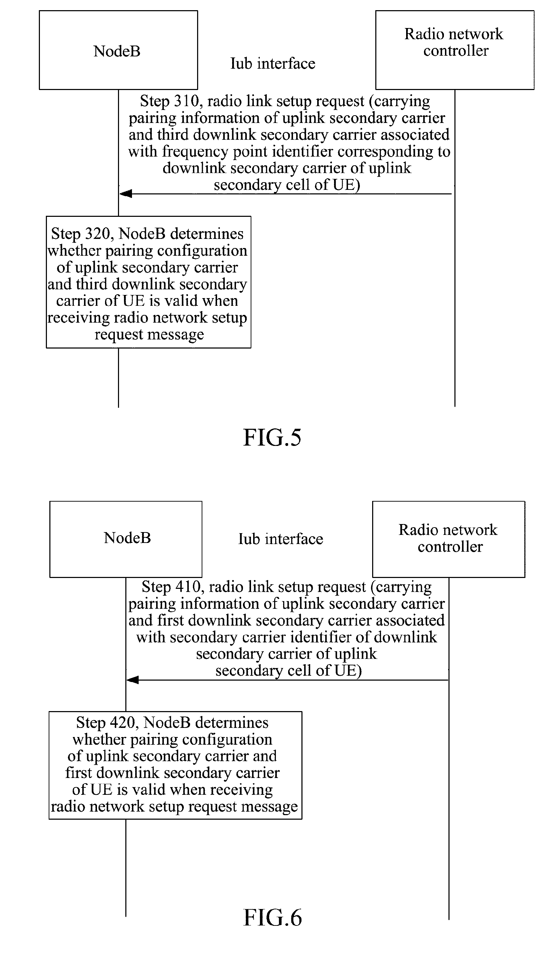

As shown in FIG.5, in this embodiment, the method for transferring and acquiring pairing information of secondary carriers comprises the following steps.

In step 310, for a UE, 2 is filled in the secondary carrier identifier information element of (representing the third downlink secondary cell) in the modified downlink secondary carrier information, and a frequency point identifier 1612 of the third downlink secondary carrier is filled in the downlink radio link frequency point identifier information element in the modified uplink secondary carrier information; a radio network controller sends a radio link setup request message carrying the pairing information of the uplink secondary carrier and the downlink secondary carrier of the UE to a NodeB, wherein the pairing information is that a downlink frequency point of the uplink secondary cell is a frequency point of the third downlink secondary carrier, and the message is sent via the IUB interface through the NBAP layer.

In step 320, the NodeB determines whether the paring configuration of the uplink secondary carrier and the third downlink secondary carrier of the UE is valid when receiving the radio network setup request message.

The specific determining method comprises determining whether the frequency point carried in the downlink radio link frequency point identifier information element of the uplink secondary cell contained in the uplink secondary carrier information is equivalent to the frequency point corresponding to the third downlink secondary carrier with the secondary carrier identifier being 2 in the downlink secondary carrier information; if yes, the paring configuration of the uplink secondary carrier and the third downlink secondary carrier is valid, the related configuration information is updated and stored; otherwise, the paring configuration of the uplink secondary carrier and the third downlink secondary carrier is invalid, and the original configuration information is maintained.

The fourth embodiment

The fourth embodiment provides a method for transferring and acquiring pairing information of an uplink secondary carrier and downlink secondary carrier associated with the secondary carrier identifier corresponding the downlink secondary carrier identified by an uplink secondary cell when data is sent and received through two uplink carriers and four downlink carriers and uplink frequencies of three secondary cells are the same.

Table 9 (a) Uplink secondary carrier information which has been added downlink radio frequency point identifier information element

| Information element/ group name | Existence | Range | Information element type and reference | Semantic Description | Key | Allocation key |
|---|---|---|---|---|---|---|
| E-DCH additional RL setup information | | 1..<maxnoof EDCHRLs> | | | Yes | Notify |
| >E-DCH additional radio link-specific information entry 1 | Necessary | | | | es | Notify |
| >>E-DCH additional radio link identifier | Necessary | | RL ID 9.2.1.49 | | | |
| >>Cell identifier | Necessary | | 9.2.1.6 | | | |

(continued)

| Information element/ group name | Existence | Range | Information element type and reference | Semantic Description | Key | Allocation key |
|---|---|---|---|---|---|---|
| >>The first radio link set indication | Necessary | | 9.2.2.16A | | | |
| >>Propagation delay | Optional | | 9.2.2.33 | | | |
| >>Initial downlink transmission power | Optional | | DL Power 9.2.1.21A | | | |
| >>Primary common pilot control channel Ec/No | Optional | | 9.2.2.32 | | | |
| >>E-AGCH power offset value | Optional | | 9.2.2.61 | | | |
| >>E-RGCH power offset value | Optional | | 9.2.2.62 | | | |
| >>E-HICH power offset value | Optional | | 9.2.2.63 | | | |
| >>Additional E-DCH MAC-d stream-specific information | Optional | | 9.2.2.118 | | | |
| >Downlink radio link frequency point identifier of uplink secondary cell (UARFCN) | Optional | | 9.2.1.65 | Corresponds to Nd [14] | | |
| >E-DCH additional radio link-specific information entry 2 | Optional | | Multi-cell E-DCH radio link-specific information 9.2.2.119 | | Yes | Ignore |

Table 9 (b) Downlink secondary carrier information which has been added secondary carrier identifier

| Information element/ group name | Existence | Range | Information element type and reference | Semantic Description | Key | Allocation key |
|---|---|---|---|---|---|---|
| Downlink secondary carrier information (Additional HS Cell Information RL Setup) | | Value range: 0~maximum number of HS-DSCH-1 | | For secondary service HS-DSCH, maximum is 1 in this version | Each is the same | Reject |
| >Radio link identifier (HS-PDSCH RL ID) | Necessary | | RL ID 9.2.1.49 | | - | |
| >Cell identifier (C-ID) | Necessary | | 9.2.1.6 | | - | |
| >HS-DSCH secondary serving information | Necessary | | 9.2.2.19aa | | - | |
| Secondary cell identifier | Necessary | 0~ maximum of secondary service HS-DSCH-1 | | for secondary carrier identifier | | |
| UE aggregate maximum bit rate | Optional | | 9.2.1.137 | | Yes | Ignore |

In this embodiment, carrier identifier information is carried using a downlink secondary carrier information information-element, i.e., different values of the downlink secondary carrier information information-element represent different downlink secondary carriers. For example, the radio network controller configures that the downlink secondary carrier information information-element with the value being 0 corresponds to the downlink primary carrier, the downlink secondary carrier information information-element with the value being 1 corresponds to the first downlink secondary carrier, the downlink secondary carrier information information-element with the value being 2 corresponds to the second downlink secondary carrier, and the downlink secondary carrier information information-element with the value being 3 corresponds to the third downlink secondary carrier. The downlink secondary carrier identifier information element of the uplink secondary cell is added to the uplink secondary carrier information, and the identifier of the downlink secondary carrier of the uplink secondary cell is carried in this information element, as shown in Table 10.

Table 10 Uplink secondary carrier information which has been added frequency point identifier of downlink secondary carrier

| Information element/group name | Existence | Range | Information element type and reference | Semantic Description | Key | Allocation key |
|---|---|---|---|---|---|---|
| E-DCH additional RL setup information | | 1..<maxnoof EDCHRLs> | | | Yes | Notify |

(continued)

| Information element/group name | Existence | Range | Information element type and reference | Semantic Description | Key | Allocation key |
|---|---|---|---|---|---|---|
| >E-DCH additional radio link-specific information entry 1 | Necessary | | | | Yes | Notify |
| >>E-DCH additional radio link identifier | Necessary | | RL ID 9.2.1.49 | | - | |
| >>Cell identifier | Necessary | | 9.2.1.6 | | - | |
| >>The first radio link set indication | Necessary | | 9.2.2.16A | | - | |
| >>Propagation delay | Optional | | 9.2.2.33 | | - | |
| >>Initial downlink transmission power | Optional | | DL Power 9.2.1.21A | | | |
| >>Primary common pilot control channel Ec/No | Optional | | 9.2.2.32 | | - | |
| >>E-AGCH power offset value | Optional | | 9.2.2.61 | | - | |
| >>E-RGCH power offset value | Optional | | 9.2.2.62 | | - | |
| >>E-HICH power offset value | Optional | | 9.2.2.63 | | - | |
| >>Additional E-DCH MAC-d stream-specific information | Optional | | 9.2.2.118 | | - | |
| >Downlink secondary carrier identifier of uplink secondary cell | Optional | | | | - | |

(continued)

| Information element/group name | Existence | Range | Information element type and reference | Semantic Description | Key | Allocation key |
|---|---|---|---|---|---|---|
| >E-DCH additional radio link-specific information entry 2 | Optional | | Multi-cell E-DCH radio link-specific information 9.2.2.119 | | Yes | Ignore |

A scene the same as that in the third embodiment is set.

As shown in FIG.6, in this embodiment, the method for transferring and acquiring pairing information of secondary carriers comprises the following steps.

In step 410, for a UE, a radio network controller sends a radio link setup request message carrying the pairing information of the uplink secondary carrier and the downlink secondary carrier of the UE to a NodeB, wherein the pairing information is associated with a secondary carrier identifier corresponding to the downlink secondary carrier of the uplink secondary cell, and a secondary carrier identifier corresponding to the first downlink secondary carrier is filled in the downlink secondary carrier identifier information element of the uplink secondary cell in the uplink secondary carrier information. The message is sent via the IUB interface through the NBAP layer.

In step 420, the NodeB determines whether the paring configuration of the uplink secondary carrier and the first downlink secondary carrier of the UE is valid when receiving the radio network setup request message.

The determining method comprises determining whether the secondary carrier identifier carried in the downlink secondary carrier identifier information element of the uplink secondary cell contained in the uplink secondary carrier information is equivalent to the secondary carrier identifier contained in the first downlink secondary carrier information; if yes, the paring configuration of the uplink secondary carrier and the first downlink secondary carrier of the UE is valid, the related configuration information is updated and stored; otherwise, the paring configuration of the uplink secondary carrier and the first downlink secondary carrier of the UE is invalid, and the original configuration information is maintained.

The fifth embodiment

The fifth embodiment provides a method for transferring and acquiring pairing information of an uplink secondary carrier and downlink secondary carrier associated with a frequency point corresponding the uplink secondary carrier of an uplink secondary cell when data is sent and received through two uplink carriers and four downlink carriers.

In this embodiment, a frequency point information element corresponding to the uplink secondary carrier and a carrier identifier information element are added to downlink secondary carrier information, and the modified downlink secondary carrier information is shown in Table 11.

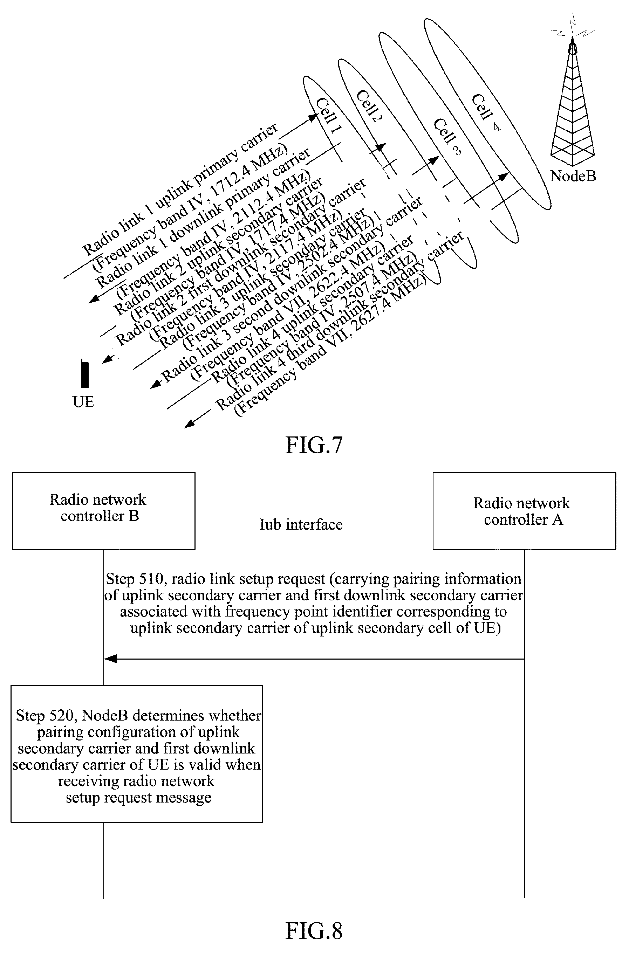

A scene where the two uplink carriers, the downlink primary carrier and the first downlink secondary carrier belong to the same operating frequency band IV and both the second downlink secondary carrier and the third downlink secondary carrier belong to the same operating frequency band VII is set. The UARFCN of the uplink primary carrier is 1312 (1712.4 MHz), the UARFCN of the uplink secondary carrier is 1337 (1717.4 MHz), and the uplink primary carrier and the first downlink secondary carrier are adjacent carriers within the operating frequency band IV. The UARFCN of the downlink primary carrier is 1537 (2112.4 MHz), the UARFCN of the first downlink secondary carrier is 1562 (2117.4 MHz), the UARFCN of the second downlink secondary carrier is 2237 (2622.4 MHz), the UARFCN of the third downlink secondary carrier is 2262 (2627.4 MHz), and the second downlink carrier and the third downlink carrier are adjacent carriers within the operating frequency band VII. The uplink primary carrier and the downlink primary carrier compose a cell with the cell identifier being 1, and their wireless link identifier is 1; the first downlink secondary carrier and the uplink secondary carrier compose a cell with the cell identifier being 2, and their wireless link identifier is 2; the second downlink secondary carrier and the uplink secondary carrier compose a cell with the identifier being 3 and their wireless link identifier is 3; and the third downlink secondary carrier and the uplink secondary carrier compose a cell with the identifier being 4 and their wireless link identifier is 4, as shown in Fig. 7.

Table 11 Downlink secondary carrier information which has been added uplink secondary carrier frequency point and downlink secondary carrier identifier

| Downlink secondary carrier information (Additional HS Cell Information RL Setup) | | Value range: 0~maximum number of HS-DSCH-1 | | For secondarily service HS-DSCH, maximum is 1 in this version | Each is the same | Reject |
|---|---|---|---|---|---|---|
| >Radio link identifier | Necessary | | RL ID 9.2.1.49 | | - | |
| (HS-PDSCH RL ID) | | | | | | |
| >Cell identifier (C-ID) | Necessary | | 9.2.1.6 | | - | |
| > HS-DSCH Secondary Serving Information | Necessary | | 9.2.2.19aa | | - | |
| >Uplink secondary carrier frequency point of uplink secondary cell (UARFCN) | Optional | | | | - | |
| >downlink secondary carrier identifier | Necessary | | | | | |
| UE aggregate maximum bit rate | Optional | | 9.2.1.137 | | Yes | Ignore |

As shown in FIG.8, in this embodiment, the method for transferring and acquiring pairing information of secondary carriers comprises the following steps.

In step 510, for a UE, radio network controller A (serving radio network controller) sends a radio link setup request message carrying the pairing information of the uplink secondary carrier and the downlink secondary carrier of the UE to radio network controller B (drift radio network controller), wherein the pairing information is associated with the frequency point corresponding to the uplink secondary carrier, i.e. 0 is filled in the downlink secondary carrier identifier information element in the modified downlink secondary carrier information, which represents first downlink secondary carrier. The frequency point corresponding to the uplink secondary carrier is filled in the uplink secondary carrier frequency point cell of the uplink secondary cell of the first downlink secondary carrier. The message is sent via the IUR interface through the RNSAP layer.

In step 520, radio network controller B determines whether the paring configuration of the uplink secondary carrier and the first downlink secondary carrier of the UE is valid when receiving the radio network setup request message.

The determining method comprises determining whether the frequency point information carried in the uplink secondary carrier frequency point cell of the first downlink secondary carrier is equivalent to the frequency point contained in the uplink secondary carrier information; if yes, the paring configuration of the uplink secondary carrier and the first downlink secondary carrier is valid, the related configuration information is updated and stored; otherwise, the paring configuration of the uplink secondary carrier and the first downlink secondary carrier is invalid, and the original configuration information is maintained.

The sixth embodiment

The sixth embodiment provides a method for transferring and acquiring pairing information of an uplink secondary carrier and downlink secondary carrier associated with a radio link identifier when data is sent and received through two uplink carriers and four downlink carriers and a certain secondary carrier with the same radio link identifier as that of the uplink secondary carrier configured in the background is the downlink secondary carrier of the uplink secondary cell.

A scene the same as that in the fifth embodiment is set.

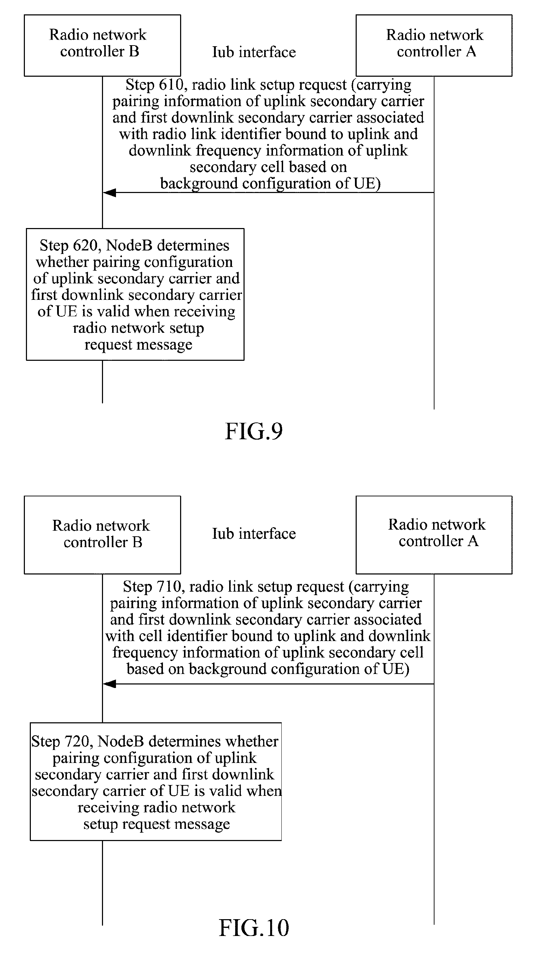

As shown in FIG.9, in this embodiment, the method for transferring and acquiring pairing information of secondary carriers comprises the following steps.

In step 610, for a UE, radio network controller A (serving radio network controller) sends a radio link setup request message carrying the pairing information of the uplink secondary carrier and the downlink secondary carrier of the UE to radio network controller B (drift radio network controller). A radio link identifier is defined as the radio link of the uplink secondary cell by background configuration information, and the paired uplink and downlink carriers are the uplink secondary carrier and the first downlink secondary carrier. The pairing information is the radio link identifiers of the uplink secondary carrier and the first downlink secondary carrier. The message is sent via the IUR interface through the RNSAP layer.

In step 620, radio network controller B determines whether the paring configuration of the uplink secondary carrier and the first downlink secondary carrier of the UE is valid when receiving the radio network setup request message.

The determining method comprises finding out downlink secondary carrier information which is equivalent to the radio link identifier of the uplink secondary carrier, if it is found out, and the downlink secondary carrier information is configured as the radio link identifier of the uplink secondary cell in the background, the paring configuration of the uplink secondary carrier and the first downlink secondary carrier of the UE is valid, then the frequency information of the downlink secondary carrier is found by background configuration and the related configuration information is updated and stored; otherwise, the paring configuration of the uplink secondary carrier and the first downlink secondary carrier is invalid, and the original configuration information is maintained.

The seventh embodiment

The seventh embodiment provides a method for transferring and acquiring pairing information of an uplink secondary carrier and downlink secondary carrier associated with a cell identifier when data is sent and received through two uplink carriers and four downlink carriers and a certain secondary carrier with the same radio link identifier as that of the uplink secondary carrier configured in the background is the downlink secondary carrier of the uplink secondary cell.

A scene the same as that in the fifth embodiment is set.

As shown in FIG.10, in this embodiment, the method for transferring and acquiring pairing information of secondary carriers comprises the following steps.

In step 710, for a UE, radio network controller A (serving radio network controller) sends a radio link setup request message carrying the pairing information of the uplink secondary carrier and the downlink secondary carrier of the UE to radio network controller B (drift radio network controller). A cell identifier is defined as the radio link of the uplink secondary cell by background configuration information, and the paired uplink and downlink carriers are the uplink secondary carrier and the first downlink secondary carrier. The pairing information is the cell identifiers of the uplink secondary carrier and the first downlink secondary carrier. The message is sent via the IUR interface through the RNSAP layer.

In step 720, radio network controller B determines whether the paring configuration of the uplink secondary carrier and the first downlink secondary carrier of the UE is valid when receiving the radio network setup request message.

The determining method comprises finding out downlink secondary carrier information which is equivalent to the cell identifier of the uplink secondary carrier, if it is found out, and the downlink secondary carrier information is configured as the cell identifier of the uplink secondary cell in the background, the paring configuration of the uplink secondary carrier and the first downlink secondary carrier of the UE is valid, then the frequency information of the downlink secondary carrier is found by background configuration and the related configuration information is updated and stored; otherwise, the paring configuration of the uplink secondary carrier and the first downlink secondary carrier is invalid, and the original configuration information is maintained.

The eighth embodiment

The eighth embodiment provides a method for transferring and acquiring pairing information of an uplink secondary carrier and downlink secondary carrier associated with a cell identifier when data is sent and received through two uplink carriers and three downlink carriers and uplink frequencies of three cells are different.

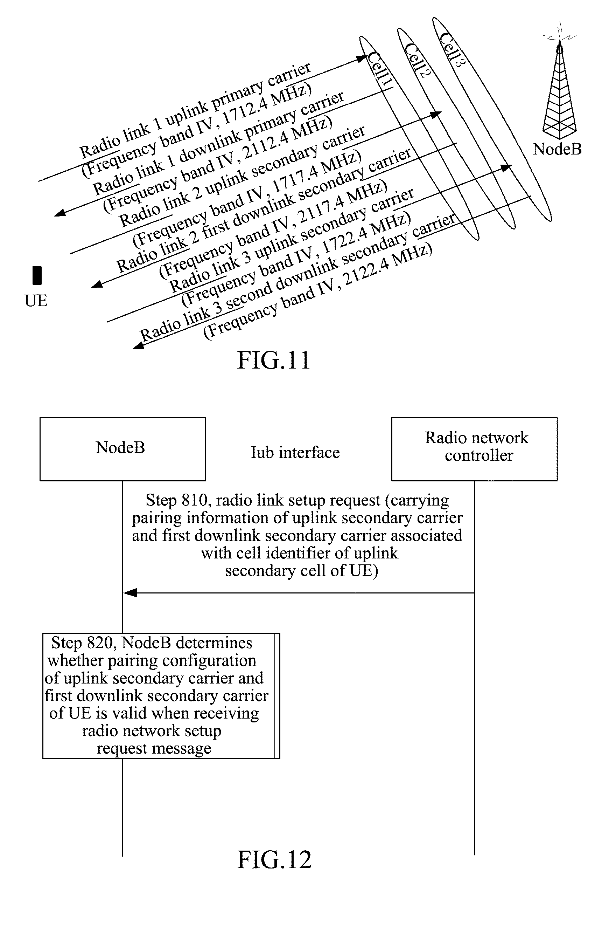

A scene where both the two uplink carriers and the three downlink carriers belong to the same operating frequency band IV is set. The UARFCN of the uplink primary carrier is 1312 (1712.4 MHz), the UARFCN of the uplink secondary carrier is 1337 (1717.4 MHz), and the uplink primary carrier and the uplink secondary carrier are adjacent carriers within the operating frequency band IV. The UARFCN of the downlink primary carrier is 1537 (2112.4 MHz), the UARFCN of the first downlink secondary carrier is 1562 (2117.4 MHz), the UARFCN of the second downlink secondary carrier is 1587 (2122.4 MHz), and the downlink primary carrier, the first downlink carrier, and the second downlink carrier are adjacent carriers within the operating frequency band IV. The uplink primary carrier and the downlink primary carrier compose a cell with the cell identifier being 1, and their wireless link identifier is 1; the first downlink secondary carrier and the uplink secondary carrier compose a cell with the cell identifier being 2, and their wireless link identifier is 2; and the second downlink secondary carrier and the uplink secondary carrier compose a cell with the identifier being 3 and their wireless link identifier is 3, as shown in Fig. 11.

As shown in FIG.12, in this embodiment, the method for transferring and acquiring pairing information of secondary carriers comprises the following steps.

In step 810, for a UE, the cell identifier of 2 of the downlink secondary cell is filled in the downlink secondary carrier information of the first downlink secondary carrier, and the cell identifier of 2 of the uplink secondary cell is filled in the uplink secondary carrier information. Then a radio network controller sends a radio link setup request message carrying the pairing information of the uplink secondary carrier and the downlink secondary carrier of the UE to a NodeB, wherein the pairing information is associated with the cell identifier of the uplink secondary cell and the cell identifier of the downlink secondary cell, i.e. the cell identifier contained in the uplink secondary carrier information is equivalent to the cell identifier contained in the downlink secondary carrier information of the first downlink secondary carrier. The message is sent via the IUB interface through the NBAP layer.

In step 820, the NodeB determines whether the paring configuration of the uplink secondary carrier and the third downlink secondary carrier of the UE is valid when receiving the radio network setup request message.

The determining method comprises determining whether the cell identifier in the downlink secondary carrier information is equivalent to the cell identifier contained in the uplink secondary carrier information; if yes, and the downlink secondary carrier information is the downlink secondary carrier information of the first downlink secondary carrier, the paring configuration of the uplink secondary carrier and the first downlink secondary carrier of the UE is valid, the related configuration information is updated and stored; otherwise, the paring configuration of the uplink secondary carrier and the first downlink secondary carrier of the UE is invalid, and the original configuration information is maintained.

The ninth embodiment

The ninth embodiment provides a method for transferring and acquiring pairing information of an uplink secondary carrier and downlink secondary carrier associated with a radio link identifier when data is sent and received through two uplink carriers and three downlink carriers and uplink frequencies of three cells are different.

A scene the same as that in the eighth embodiment is set.

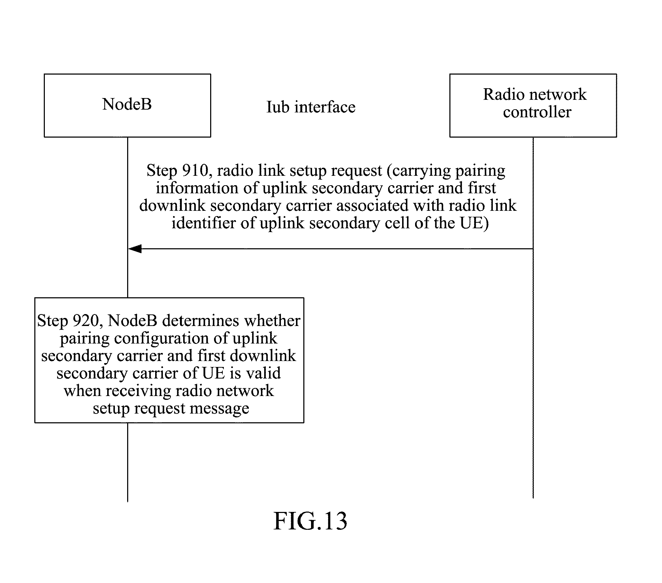

As shown in FIG. 13, in this embodiment, the method for transferring and acquiring pairing information of secondary carriers comprises the following steps.

In step 910, for a UE, the radio link identifier of 2 of the downlink secondary cell is filled in the downlink secondary carrier information of the first downlink secondary carrier, and the radio link identifier of 2 of the uplink secondary cell is filled in the uplink secondary carrier information. Then a radio network controller sends a radio link setup request message carrying the pairing information of the uplink secondary carrier and the downlink secondary carrier of the UE to a NodeB, wherein the pairing information is associated with the radio link identifier of 2 of the uplink secondary cell and the radio link identifier of 2 of the downlink secondary cell, i.e. the radio link identifier contained in the uplink secondary carrier information is equivalent to the radio link identifier contained in the downlink secondary carrier information of the first downlink secondary carrier. The message is sent via the IUB interface through the NBAP layer.

In step 920, the NodeB determines whether the paring configuration of the uplink secondary carrier and the third downlink secondary carrier of the UE is valid when receiving the radio network setup request message.

The determining method comprises determining whether the radio link identifier contained in the downlink secondary carrier information is equivalent to the radio link identifier contained in the uplink secondary carrier information; if yes, and the corresponding downlink secondary carrier is the first downlink secondary carrier, the paring configuration of the uplink secondary carrier and the first downlink secondary carrier of the UE is valid, the related configuration information is updated and stored; otherwise, the paring configuration of the uplink secondary carrier and the first downlink secondary carrier of the UE is invalid, and the original configuration information is maintained.

The invention further provides a system for transferring and acquiring pairing information of secondary carriers comprising a serving radio network controller configured to, for a specified user equipment (UE), configure pairing information of an uplink secondary carrier and a downlink secondary carrier of an uplink secondary cell, and send the pairing information of the uplink secondary carrier and the downlink secondary carrier of the uplink secondary cell in multiple carriers of the UE to a NodeB through control signaling, or send the pairing information of the uplink secondary carrier and the downlink secondary carrier to a drift radio network controller through the control signaling, the drift radio network controller sending the pairing information of the uplink secondary carrier and the downlink secondary carrier to the NodeB.

Furthermore, the control signaling is a radio link setup request message or a radio link reconfiguration preparation message.

Furthermore, the serving radio network controller is configured to carry the pairing information of the uplink secondary carrier and the downlink secondary carrier in the control signaling in one of the following ways (a) to (d):

(a) the pairing information of the uplink secondary carrier and the downlink secondary carrier is associated with a cell identifier of the uplink secondary cell; the uplink secondary cell identifier is added to uplink secondary carrier information and/or downlink secondary carrier information carried in the control signaling, wherein the uplink secondary cell identifier is used to indicate whether a cell is an uplink secondary cell, and when the uplink secondary cell identifier in the uplink secondary carrier information and/or downlink secondary carrier information indicates that the cell is an uplink secondary cell, an uplink secondary carrier and a downlink secondary carrier of a cell corresponding to the cell identifier contained in the uplink secondary carrier information or downlink secondary carrier information are the paired uplink secondary carrier and downlink secondary carrier;

(b) the pairing information of the uplink secondary carrier and the downlink secondary carrier is associated with a radio link identifier of the uplink secondary cell; an uplink secondary cell identifier is added to uplink secondary carrier information and/or downlink secondary carrier information, wherein the uplink secondary cell identifier is used to indicate whether a cell is an uplink secondary cell, and when the uplink secondary cell identifier in the uplink secondary carrier information and/or downlink secondary carrier information indicates that the cell is an uplink secondary cell, an uplink secondary carrier and a downlink secondary carrier of a radio link corresponding to the radio link identifier contained in the uplink secondary carrier information or downlink secondary carrier information are the paired uplink secondary carrier and downlink secondary carrier;

(c) the pairing information of the uplink secondary carrier and the downlink secondary carrier is associated with downlink secondary carrier indication information of the uplink secondary cell; the downlink secondary carrier indication information of the uplink secondary cell is added to uplink secondary carrier information, wherein the downlink secondary carrier indication information is used to indicate a downlink secondary carrier; the downlink secondary carrier indicated by the downlink secondary carrier indication information carried in the uplink secondary carrier information is the downlink secondary carrier paired with the uplink secondary carrier, and the downlink secondary carrier indication information includes frequency point information of the downlink secondary carrier or identifier information of the downlink secondary carrier; and

(d) uplink secondary carrier frequency point information of the uplink secondary cell is added to downlink secondary carrier information, and the pairing information of the uplink secondary carrier and the downlink secondary carrier is associated with the uplink secondary carrier frequency point information of the uplink secondary cell; when the uplink secondary carrier frequency point information of the uplink secondary cell carried in the downlink secondary carrier information is not empty, the downlink secondary carrier corresponding to the downlink secondary carrier information and the uplink secondary carrier corresponding to the uplink secondary carrier frequency point information of the uplink secondary cell carried in the downlink secondary carrier information are the paired downlink secondary carrier and uplink secondary carrier.

Furthermore, the drift radio network controller or the NodeB is configured to check whether the pairing information of the uplink secondary carrier and the downlink secondary carrier in the control signaling is valid after receiving the control signaling.

Furthermore, the serving radio network controller is further configured to carry the downlink secondary carrier information in the control signaling, and carry carrier identifier information in the downlink secondary carrier information to indicate which downlink secondary carrier the downlink secondary carrier information belongs to, wherein the carrier identifier information is carried using an additional high-speed cell information radio link setup information element or newly added secondary carrier identifier information element or newly added secondary carrier frequency point information information-element.

It can be understood by those skilled in the art that all or some of the steps in the described method can be implemented by related hardware instructed by programs which may be stored in computer readable storage mediums, such as read-only memory, disk or CD-ROM, etc. Alternatively, all or some of the steps in the embodiments described above may also be implemented using one or more integrated circuits. Accordingly, each module/unit in the embodiments described above may be implemented in a form of hardware, or software functional module. The present invention is not limited to combinations of hardware and software in any particular form.

Industrial Applicability

The present invention provides a method for transferring and acquiring pairing information of secondary carriers. In the method, for a specified UE, a radio network controller configures a carrier identifier and pairing information of an uplink secondary carrier and a downlink secondary carrier and sends the pairing information of the uplink and downlink carriers to a NodeB such that the NodeB can obtain the pairing information of the secondary carriers to solve the problem of sending and acquiring of scheduling information of the uplink secondary carrier of a UE.

**Claims**

1. A method for transferring and acquiring pairing information of secondary carriers comprising: for a specified user equipment (UE), a serving radio network controller configuring pairing information of an uplink secondary carrier and a downlink secondary carrier of an uplink secondary cell, and sending the pairing information of the uplink secondary carrier and the downlink secondary carrier of the uplink secondary cell in multiple carriers of the UE to a NodeB through control signaling, or sending the pairing information of the uplink secondary carrier and the downlink secondary carrier to a drift radio network controller through the control signaling, the drift radio network controller sending the pairing information of the uplink secondary carrier and the downlink secondary carrier to the NodeB.

2. The method according to claim 1, wherein the control signaling is a radio link setup request message or a radio link reconfiguration preparation message.

3. The method according to claim 1, wherein when the serving radio network controller sends the pairing information to the NodeB through the control signaling or sends the pairing information to the drift radio network controller through the control signaling, and the drift radio network controller sends the pairing information to the NodeB, the serving radio network controller carries the pairing information of the uplink secondary carrier and the downlink secondary carrier in the control signaling in one of the following ways (a) to (d):

(a) the pairing information of the uplink secondary carrier and the downlink secondary carrier is associated with a cell identifier of the uplink secondary cell; the uplink secondary cell identifier is added to uplink secondary carrier information and/or downlink secondary carrier information carried in the control signaling, wherein the uplink secondary cell identifier is used to indicate whether a cell is an uplink secondary cell, and when the uplink secondary cell identifier in the uplink secondary carrier information and/or downlink secondary carrier information indicates that the cell is an uplink secondary cell, an uplink secondary carrier and a downlink secondary carrier of a cell corresponding to the cell identifier contained in the uplink secondary carrier information or downlink secondary carrier information are the paired uplink secondary carrier and downlink secondary carrier;
(b) the pairing information of the uplink secondary carrier and the downlink secondary carrier is associated with a radio link identifier of the uplink secondary cell; an uplink secondary cell identifier is added to uplink secondary carrier information and/or downlink secondary carrier information, wherein the uplink secondary cell identifier is used to indicate whether a cell is an uplink secondary cell, and when the uplink secondary cell identifier in the uplink secondary carrier information and/or downlink secondary carrier information indicates that the cell is an uplink secondary cell, an uplink secondary carrier and a downlink secondary carrier of a radio link corresponding to the radio link identifier contained in the uplink secondary carrier information or downlink secondary carrier information are the paired uplink secondary carrier and downlink secondary carrier;
(c) the pairing information of the uplink secondary carrier and the downlink secondary carrier is associated with downlink secondary carrier indication information of the uplink secondary cell; the downlink secondary carrier indication information of the uplink secondary cell is added to uplink secondary carrier information, wherein the downlink secondary carrier indication information is used to indicate a downlink secondary carrier; the downlink secondary carrier indicated by the downlink secondary carrier indication information carried in the uplink secondary carrier information is the downlink secondary carrier paired with the uplink secondary carrier, and the downlink secondary carrier indication information includes frequency point information of the downlink secondary carrier or identifier information of the downlink secondary carrier; and

(d) uplink secondary carrier frequency point information of the uplink secondary cell is added to downlink secondary carrier information, and the pairing information of the uplink secondary carrier and the downlink secondary carrier is associated with the uplink secondary carrier frequency point information of the uplink secondary cell; when the uplink secondary carrier frequency point information of the uplink secondary cell carried in the downlink secondary carrier information is not empty, the downlink secondary carrier corresponding to the downlink secondary carrier information and the uplink secondary carrier corresponding to the uplink secondary carrier frequency point information of the uplink secondary cell carried in the downlink secondary carrier information are the paired downlink secondary carrier and uplink secondary carrier.

4. The method according to claim 1, further comprising:

the pairing information of the uplink secondary carrier and the downlink secondary carrier being associated with the radio link identifier or the cell identifier of the uplink secondary cell; configuring the uplink secondary carrier and the downlink secondary carrier corresponding to the radio link identifier or the cell identifier as the paired uplink secondary carrier and downlink secondary carrier through the serving radio network controller and the drift radio network controller, or through background of the NodeB.

5. The method according to any one of claims 1 to 3, further comprising:

after receiving the control signaling, the drift radio network controller or the NodeB checking whether the pairing information of the uplink secondary carrier and the downlink secondary carrier in the control signaling is valid.

6. The method according to claim 1, further comprising:

the serving radio network controller carrying the downlink secondary carrier information in the control signaling, and carrying carrier identifier information in the downlink secondary carrier information to indicate which downlink secondary carrier the downlink secondary carrier information belongs to, wherein the carrier identifier information is carried using an additional high-speed cell information radio link setup information element or newly added secondary carrier identifier information element or newly added secondary carrier frequency point information information-element.

7. A system for transferring and acquiring pairing information of secondary carriers comprising a serving radio network controller configured to, for a specified user equipment (UE), configure pairing information of an uplink secondary carrier and a downlink secondary carrier of an uplink secondary cell, and send the pairing information of the uplink secondary carrier and the downlink secondary carrier of the uplink secondary cell in multiple carriers of the UE to a NodeB through control signaling, or send the pairing information of the uplink secondary carrier and the downlink secondary carrier to a drift radio network controller through the control signaling, the drift radio network controller sending the pairing information of the uplink secondary carrier and the downlink secondary carrier to the NodeB.

8. The system according to claim 7, wherein the control signaling is a radio link setup request message or a radio link reconfiguration preparation message.

9. The system according to claim 7, wherein the serving radio network controller is configured to carry the pairing information of the uplink secondary carrier and the downlink secondary carrier in the control signaling in one of the following ways (a) to (d):

(a) the pairing information of the uplink secondary carrier and the downlink secondary carrier is associated with a cell identifier of the uplink secondary cell; the uplink secondary cell identifier is added to uplink secondary carrier information and/or downlink secondary carrier information carried in the control signaling, wherein the uplink secondary cell identifier is used to indicate whether a cell is an uplink secondary cell, and when the uplink secondary cell identifier in the uplink secondary carrier information and/or downlink secondary carrier information indicates that the cell is an uplink secondary cell, an uplink secondary carrier and a downlink secondary carrier of a cell corresponding to the cell identifier contained in the uplink secondary carrier information or downlink secondary carrier information are the paired uplink secondary carrier and downlink secondary carrier;

(b) the pairing information of the uplink secondary carrier and the downlink secondary carrier is associated with a radio link identifier of the uplink secondary cell; an uplink secondary cell identifier is added to uplink secondary carrier information and/or downlink secondary carrier information, wherein the uplink secondary cell identifier is used to indicate whether a cell is an uplink secondary cell, and when the uplink secondary cell identifier in the uplink secondary carrier information and/or downlink secondary carrier information indicates that the cell is an uplink secondary cell, an uplink secondary carrier and a downlink secondary carrier of a radio link corresponding to the radio link identifier contained in the uplink secondary carrier information or downlink secondary carrier information are the paired uplink secondary carrier and downlink secondary carrier;

(c) the pairing information of the uplink secondary carrier and the downlink secondary carrier is associated with downlink secondary carrier indication information of the uplink secondary cell; the downlink secondary carrier indication information of the uplink secondary cell is added to uplink secondary carrier information, wherein the downlink secondary carrier indication information is used to indicate a downlink secondary carrier; the downlink secondary carrier indicated by the downlink secondary carrier indication information carried in the uplink secondary carrier information is the downlink secondary carrier paired with the uplink secondary carrier, and the downlink secondary carrier indication information includes frequency point information of the downlink secondary carrier or identifier information of the downlink secondary carrier; and

(d) uplink secondary carrier frequency point information of the uplink secondary cell is added to downlink secondary carrier information, and the pairing information of the uplink secondary carrier and the downlink secondary carrier is associated with the uplink secondary carrier frequency point information of the uplink secondary cell; when the uplink secondary carrier frequency point information of the uplink secondary cell carried in the downlink secondary carrier information is not empty, the downlink secondary carrier corresponding to the downlink secondary carrier information and the uplink secondary carrier corresponding to the uplink secondary carrier frequency point information of the uplink secondary cell carried in the downlink secondary carrier information are the paired downlink secondary carrier and uplink secondary carrier.

10. The system according to any one of claims 7 to 9, wherein the drift radio network controller or the NodeB is configured to check whether the pairing information of the uplink secondary carrier and the downlink secondary carrier in the control signaling is valid after receiving the control signaling.

11. The system according to claim 7, wherein the serving radio network controller is further configured to carry the downlink secondary carrier information in the control signaling, and carry carrier identifier information in the downlink secondary carrier information to indicate which downlink secondary carrier the downlink secondary carrier information belongs to, wherein the carrier identifier information is carried using an additional high-speed cell information radio link setup information element or newly added secondary carrier identifier information element or newly added secondary carrier frequency point information information-element.

FIG.1

Step 110, radio link setup request (carrying pairing information of uplink secondary carrier and first downlink secondary carrier associated with cell identifier of uplink secondary cell of UE)

Step 120, NodeB determines whether pairing configuration of uplink secondary carrier and first downlink secondary carrier of UE is valid when receiving radio network setup request message

FIG.2

| NodeB | Iub interface | Radio network controller |
|---|---|---|

Step 210, radio link reconfiguration preparation (carrying pairing information of uplink secondary carrier and second downlink secondary carrier associated with radio link identifier of uplink secondary cell of UE)

Step 220, NodeB determines whether pairing configuration of uplink secondary carrier and second downlink secondary carrier of UE is valid when receiving radio link reconfiguration preparation message

FIG.3

Radio link 1 uplink primary carrier (Frequency band IV, 1712.4 MHz)
Radio link 1 downlink primary carrier (Frequency band IV, 2112.4 MHz)
Radio link 2 uplink secondary carrier (Frequency band IV, 1717.4 MHz)
Radio link 2 first downlink secondary carrier (Frequency band IV, 2117.4 MHz)
Radio link 3 uplink secondary carrier (Frequency band IV, 1722.4 MHz)
Radio link 3 second downlink secondary carrier (Frequency band IV, 2122.4 MHz)
Radio link 4 uplink secondary carrier (Frequency band IV, 1727.4 MHz)
Radio link 4 third downlink secondary carrier (Frequency band IV, 2127.4 MHz)

UE

Cell 1
Cell 2
Cell 3
Cell 4

NodeB

FIG.4

| NodeB | Iub interface | Radio network controller |
|---|---|---|

Step 310, radio link setup request (carrying pairing information of uplink secondary carrier and third downlink secondary carrier associated with frequency point identifier corresponding to downlink secondary carrier of uplink secondary cell of UE)

Step 320, NodeB determines whether pairing configuration of uplink secondary carrier and third downlink secondary carrier of UE is valid when receiving radio network setup request message

## FIG.5

| NodeB | Iub interface | Radio network controller |
|---|---|---|

Step 410, radio link setup request (carrying pairing information of uplink secondary carrier and first downlink secondary carrier associated with secondary carrier identifier of downlink secondary carrier of uplink secondary cell of UE)

Step 420, NodeB determines whether pairing configuration of uplink secondary carrier and first downlink secondary carrier of UE is valid when receiving radio network setup request message

## FIG.6

Radio link 1 uplink primary carrier
(Frequency band IV , 1712.4 MHz)
Radio link 1 downlink primary carrier
(Frequency band IV , 2112.4 MHz)
Radio link 2 uplink secondary carrier
(Frequency band IV , 1717.4 MHz)
Radio link 2 first downlink secondary carrier
(Frequency band IV , 2117.4 MHz)
Radio link 3 uplink secondary carrier
(Frequency band IV , 2502.4 MHz)
Radio link 3 second downlink secondary carrier
(Frequency band VII , 2622.4 MHz)
Radio link 4 uplink secondary carrier
(Frequency band IV , 2507.4 MHz)
Radio link 4 third downlink secondary carrier
(Frequency band VII, 2627.4 MHz)

Cell 1

Cell 2

Cell 3

Cell 4

NodeB

UE

## FIG.7

| Radio network controller B | Iub interface | Radio network controller A |
|---|---|---|

Step 510, radio link setup request (carrying pairing information of uplink secondary carrier and first downlink secondary carrier associated with frequency point identifier corresponding to uplink secondary carrier of uplink secondary cell of UE)

Step 520, NodeB determines whether pairing configuration of uplink secondary carrier and first downlink secondary carrier of UE is valid when receiving radio network setup request message

## FIG.8

| Radio network controller B | Iub interface | Radio network controller A |
|---|---|---|

Step 610, radio link setup request (carrying pairing information of uplink secondary carrier and first downlink secondary carrier associated with radio link identifier bound to uplink and downlink frequency information of uplink secondary cell based on background configuration of UE)

Step 620, NodeB determines whether pairing configuration of uplink secondary carrier and first downlink secondary carrier of UE is valid when receiving radio network setup request message

## FIG.9

| Radio network controller B | Iub interface | Radio network controller A |
|---|---|---|

Step 710, radio link setup request (carrying pairing information of uplink secondary carrier and first downlink secondary carrier associated with cell identifier bound to uplink and downlink frequency information of uplink secondary cell based on background configuration of UE)

Step 720, NodeB determines whether pairing configuration of uplink secondary carrier and first downlink secondary carrier of UE is valid when receiving radio network setup request message

## FIG.10

Radio link 1 uplink primary carrier
(Frequency band IV, 1712.4 MHz)
Radio link 1 downlink primary carrier
(Frequency band IV, 2112.4 MHz)
Radio link 2 uplink secondary carrier
(Frequency band IV, 1717.4 MHz)
Radio link 2 first downlink secondary carrier
(Frequency band IV, 2117.4 MHz)
Radio link 3 uplink secondary carrier
(Frequency band IV, 1722.4 MHz)
Radio link 3 second downlink secondary carrier
(Frequency band IV, 2122.4 MHz)

Cell 1
Cell 2
Cell 3

NodeB

UE

## FIG.11

| NodeB | Iub interface | Radio network controller |
|---|---|---|

Step 810, radio link setup request (carrying pairing information of uplink secondary carrier and first downlink secondary carrier associated with cell identifier of uplink secondary cell of UE)

Step 820, NodeB determines whether pairing configuration of uplink secondary carrier and first downlink secondary carrier of UE is valid when receiving radio network setup request message

## FIG.12

| NodeB | Iub interface | Radio network controller |
|---|---|---|

Step 910, radio link setup request (carrying pairing information of uplink secondary carrier and first downlink secondary carrier associated with radio link identifier of uplink secondary cell of the UE)

Step 920, NodeB determines whether pairing configuration of uplink secondary carrier and first downlink secondary carrier of UE is valid when receiving radio network setup request message

FIG.13

# INTERNATIONAL SEARCH REPORT

International application No.

PCT/CN2011/070038

**A. CLASSIFICATION OF SUBJECT MATTER**

H04W72/04 (2009.01) i

According to International Patent Classification (IPC) or to both national classification and IPC

**B. FIELDS SEARCHED**

Minimum documentation searched (classification system followed by classification symbols)

IPC： H04W; H04Q; H04L; H04B

Documentation searched other than minimum documentation to the extent that such documents are included in the fields searched

Electronic data base consulted during the international search (name of data base and, where practicable, search terms used)

CPRSABS; CNKI; WPI; EPODOC: multi?carrier, multiple carrier?, secondary carrier, assistant carrier, auxiliary carrier, uplink, downlink, forward, backward, pair, match???, mapping, related

**C. DOCUMENTS CONSIDERED TO BE RELEVANT**

| Category* | Citation of document, with indication, where appropriate, of the relevant passages | Relevant to claim No. |
|---|---|---|
| A | CN101160764A (HUAWEI TECHNOLOGIES CO LTD) 09 Apr. 2008 (09.04.2008) the whole document | 1-11 |
| A | CN1885759A (SHANGHAI ULTIMATE POWER COMMUNICATION) 27 Dec.2006 (27.12.2006) the whole document | 1-11 |
| A | WO2008095748A1(NOKIA SIEMENS NETWORKS GMBH) 14 Aug. 2008 (14.08.2008) the whole document | 1-11 |

☐ Further documents are listed in the continuation of Box C.  ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 31 Mar. 2011 (31.03.2011) | **07 Apr. 2011 (07.04.2011)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **WANG, Ran** Telephone No. (86-10)62411390 |
|---|---|

Form PCT/ISA /210 (second sheet) (July 2009)

## INTERNATIONAL SEARCH REPORT
### Information on patent family members

| | International application No. |
|---|---|
| | PCT/CN2011/070038 |

| Patent Documents referred in the Report | Publication Date | Patent Family | Publication Date |
|---|---|---|---|
| CN101160764A | 09.04.2008 | CN1859057A | 08.11.2006 |
| | | WO2007045186A1 | 26.04.2007 |
| | | US2008198813A1 | 21.08.2008 |
| | | CA2626411A1 | 26.04.2007 |
| | | CN100438384C | 26.11.2008 |
| CN1885759A | 27.12.2006 | WO2006136076A1 | 28.12.2006 |
| | | EP1895697A1 | 05.03.2008 |
| | | INMUMNP200800057EE | 15.02.2008 |
| | | KR20080034891A | 22.04.2008 |
| | | JP2008547291TT | 25.12.2008 |
| | | CN100574177CC | 23.12.2009 |
| | | US2010034150A1 | 11.02.2010 |
| | | KR100942522BB1 | 12.02.2010 |
| WO2008095748A1 | 14.08.2008 | GB2447524A | 17.09.2008 |
| | | US2008259880A1 | 23.10.2008 |
| | | TW200850029A | 16.12.2008 |
| | | EP2119301A1 | 18.11.2009 |
| | | CN101682913A | 24.03.2010 |

Form PCT/ISA /210 (patent family annex) (July 2009)